# EUROPEAN PATENT SPECIFICATION

(11) **EP 2 945 269 B1**
(45) Date of publication and mention of the grant of the patent: **26.05.2021**
(21) Application number: 15162990.4
(22) Date of filing: 09.04.2015
(51) Int. Cl.: H02M 1/34, H02M 7/487

(54) **NEUTRAL POINT CONVERTER COMPRISING A VOLTAGE CLAMP CIRCUIT**
NEUTRALPUNKTWANDLER MIT EINER SPANNUNGSKLEMMSCHALUNG
CONVERTISSEUR DE POINT NEUTRE COMPRENANT UN CIRCUIT DE VERROUILLAGE DE TENSION

(30) Priority: 18.04.2014 CN 201410158011
(43) Date of publication of application: 18.11.2015
(73) Proprietor: Delta Electronics (Shanghai) Co., Ltd., 201209 Shanghai (CN)
(72) Inventor: Feng, Wei-Yi, 201209 Pudong (CN); Zhang, Wei-Qiang, 201209 Pudong (CN); Wu, Hong-Yang, 201209 Pudong (CN)
(74) Representative: Boult Wade Tennant LLP

(56) References cited:
- EP-A2- 1 619 785
- EP-A2- 2 141 794
- WO-A1-2011/067838
- DE-A1-102010 008 426

## Description

### BACKGROUND

### Technical Field

The present disclosure relates to converter. More particularly, the present disclosure relates to a voltage clamp circuit in a converter.

### Description of Related Art

Conventionally, a converter having an output with multiple voltage levels is widely applied in related fields such as solar inverter, uninterruptible power supply (UPS), power conditioning system (PCS), etc.

The converter usually includes devices such as switches, in which the switch in a current commutation path is switched on and off alternately to perform a current commutation operation.

However, parasitic inductance usually exists in the current path, and thus, in a transient period of the aforementioned switch being switched on and off alternately, the existence of the parasitic inductance results in that the aforementioned switch sustains a higher voltage, and even when the aforementioned switch is switched off, voltage spikes are generated to affect the aforementioned switch. For example, when an input voltage of the converter is 380 Volts, the voltage spikes may reach up to 600 Volts and is much higher than a rated voltage sustainable for the switch, in the transient period of the aforementioned switch being switched off. As a result, damages to the switch are caused such that the converter cannot operate normally. 3-level pulse width modulation inverters with snubber circuit were disclosed in DE 10 2010008426 A1. Converter circuits with voltage rise rate limitation were disclosed in EP 1619785 A2. PWM inverter devices were disclosed in WO 2011067838 A1.

### SUMMARY

The present invention provides a converter according to claim 1. Preferred embodiments are defined in the dependent claims.

In some embodiments, the voltage clamp circuit includes a charging circuit and an active circuit. The charging circuit is electrically coupled in parallel with the switch circuit between the output terminal and the neutral point terminal, and the charging circuit is configured to perform a charging operation according to the voltages across the switch circuit. The active circuit is electrically coupled to the charging circuit and configured to output an operation voltage to one of the positive input terminal, the negative input terminal, the output terminal, and a driving circuit according to the operation of the charging circuit, in which the driving circuit is configured to drive the first switch unit, the second switch unit or the switch circuit.

### BRIEF DESCRIPTION OF THE DRAWINGS

The disclosure can be more fully understood by reading the following detailed description of various embodiments, with reference to the accompanying drawings as follows:
Fig. 1A is a schematic diagram of a converter according to a first embodiment of the present disclosure;
Fig. 1B is a schematic diagram of a converter according to a second embodiment of the present disclosure;
Fig. 2A is a schematic diagram of a converter according to a third embodiment of the present disclosure;
Fig. 2B is a schematic diagram of a converter according to a fourth embodiment of the present disclosure;
Figs. 3A-3B are operation diagrams of the converter illustrated in Fig. 2B, according to one embodiment of the present disclosure;
Fig. 3C is a variation diagram of the voltage corresponding to the switch without voltage clamp operation in the conventional art;
Fig. 3D is a variation diagram of voltages in the converter as illustrated in Fig. 2B, according to one embodiment of the present disclosure;
Fig. 4A is a schematic diagram of a converter according to a fifth embodiment of the present disclosure;
Figs. 4B-4C are operation diagrams of the converter illustrated in Fig. 4A, according to one embodiment of the present disclosure;
Fig. 5A is a schematic diagram of a converter according to a sixth embodiment of the present disclosure;
Figs. 5B-5C are operation diagrams of the converter illustrated in Fig. 5A, according to one embodiment of the present disclosure;
Fig. 6A is a schematic diagram of a converter according to a seventh embodiment of the present disclosure;
Figs. 6B-6C are operation diagrams of the converter illustrated in Fig. 6A, according to one embodiment of the present disclosure;
Fig. 7 is a schematic diagram of a converter according to an eighth embodiment of the present disclosure;
Fig. 8 is a schematic diagram of a converter according to a ninth embodiment of the present disclosure;
Fig. 9A is a schematic diagram of a converter according to a tenth embodiment of the present disclosure;
Figs. 9B-9C are operation diagrams of the converter illustrated in Fig. 9A, according to one embodiment of the present disclosure;
Fig. 9D is a variation diagram of voltages in the converter as illustrated in Fig. 9A, according to one embodiment of the present disclosure;
Figs. 10A-10B are schematic diagrams of a converter and the operations thereof, according to an eleventh embodiment of the present disclosure;
Figs. 11A-11B are schematic diagrams of a converter and the operations thereof, according to a twelfth embodiment of the present disclosure;
Figs. 12A-12B are schematic diagrams of a converter and the operations thereof, according to a thirteenth embodiment of the present disclosure;
Fig. 13 is a schematic diagram of a converter and the operation thereof, according to a fourteenth embodiment of the present disclosure;
Figs. 14A-14D are schematic diagrams of converters according to a fifteenth through an eighteenth embodiments of the present disclosure;
Figs. 15A-15D are schematic diagrams of converters according to a nineteenth through a twenty-second embodiments of the present disclosure;
Fig. 16A is a schematic diagram of a converter according to a twenty-third embodiment of the present disclosure;
Fig. 16B is a schematic diagram of a converter according to a twenty-fourth embodiment of the present disclosure;
Fig. 16C is an operation diagram of the converter illustrated in Fig. 16B, according to one embodiment of the present disclosure;
Fig. 16D is a schematic diagram of a converter according to a twenty-fifth embodiment of the present disclosure;
Fig. 16E is a schematic diagram of a converter according to a twenty-sixth embodiment of the present disclosure;
Fig. 17 is a schematic diagram of a converter according to a twenty-seventh embodiment of the present disclosure;
Fig. 18 is a schematic diagram of a converter according to a twenty-eighth embodiment of the present disclosure;
Fig. 19 is a schematic diagram of a converter according to a twenty-ninth embodiment of the present disclosure;
Fig. 20A is a schematic diagram of a converter according to a thirtieth embodiment of the present disclosure;
Fig. 20B is a schematic diagram of a converter according to a thirty-first embodiment of the present disclosure;
Fig. 21A is a schematic diagram of a basic topology of a converter according to some embodiments of the present disclosure;
Fig. 21B is a schematic diagram of a basic topology of a converter according to some other embodiments of the present disclosure;
Fig. 22A is a schematic diagram of a basic topology of a converter according to another embodiments of the present disclosure; and
Fig. 22B is a schematic diagram of a basic topology of a converter according to still another embodiments of the present disclosure.

### DETAILED DESCRIPTION

In the following description, specific details are presented to provide a thorough understanding of the embodiments of the present disclosure. Persons of ordinary skill in the art will recognize, however, that the present disclosure can be practiced without one or more of the specific details, or in combination with other components. Well-known implementations or operations are not shown or described in detail to avoid obscuring aspects of various embodiments of the present disclosure.

The terms used in this specification generally have their ordinary meanings in the art and in the specific context where each term is used. The use of examples in this specification, including examples of any terms discussed herein, is illustrative only, and in no way limits the scope and meaning of the disclosure or of any exemplified term. Likewise, the present disclosure is not limited to various embodiments given in this specification.

As used herein, "around", "about", "approximately" or "substantially" shall generally mean within 20 percent, preferably within 10 percent, and more preferably within 5 percent of a given value or range. Numerical quantities given herein are approximate, meaning that the term "around", "about", "approximately" or "substantially" can be inferred if not expressly stated, or meaning other approximate values.

It will be understood that in the present disclosure, although the terms "first," "second," etc., may be used herein to describe various elements, these elements should not be limited by these terms. These terms are used to distinguish one element from another. For example, a first element could be termed a second element, and, similarly, a second element could be termed a first element, without departing from the scope of the embodiments. As used herein, the term "and/or" includes any and all combinations of one or more of the associated listed items.

As used herein, the terms "comprising," "including," "having," "containing," "involving," and the like are to be understood to be open-ended, i.e., to mean including but not limited to.

Reference throughout the specification to "one embodiment" or "an embodiment" means that a particular feature, structure, implementation, or characteristic described in connection with the embodiment is included in at least one embodiment of the present disclosure. Thus, uses of the phrases "in one embodiment" or "in an embodiment" in various places throughout the specification are not necessarily all referring to the same embodiment. Furthermore, the particular features, structures, implementation, or characteristics may be combined in any suitable manner in one or more embodiments.

In the following description and claims, the terms "coupled" and "connected", along with their derivatives, may be used. In particular embodiments, "connected" and "coupled" may be used to indicate that two or more elements are in direct physical or electrical contact with each other, or may also mean that two or more elements may be in indirect contact with each other. "Coupled" and "connected" may still be used to indicate that two or more elements cooperate or interact with each other.

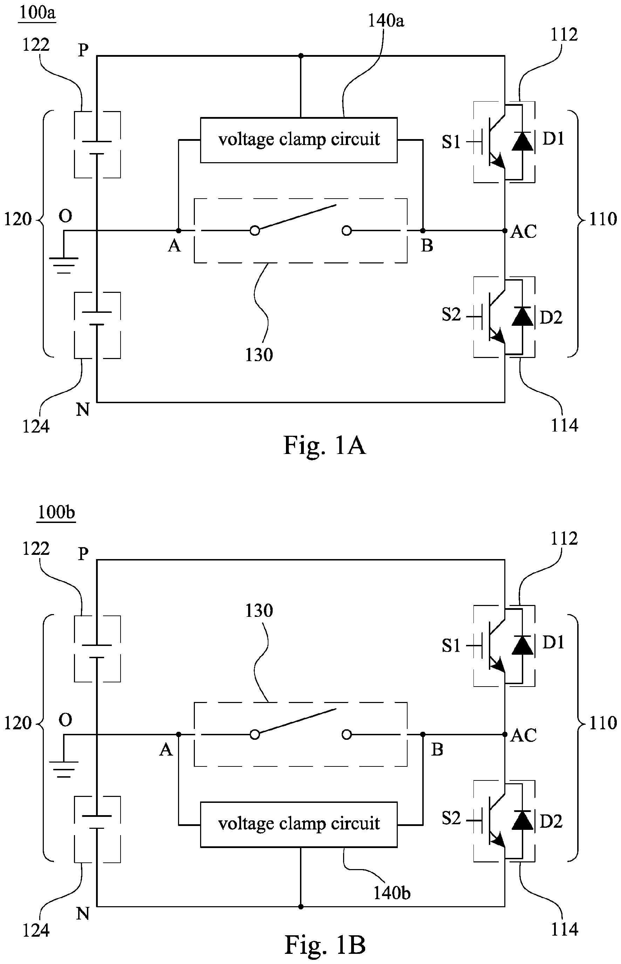

Fig. 1A is a schematic diagram of a converter according to a first embodiment of the present disclosure. As illustrated in Fig. 1A, the converter 100a includes a first bridge arm 110, a second bridge arm 120, a switch circuit 130 and a voltage clamp circuit 140a.

The first bridge arm 110 includes switch units 112 and 114. The switch units 112 and 114 are electrically coupled in series at an output terminal AC and are arranged between a positive input terminal P and a negative input terminal N. The second bridge arm 120 includes voltage sources 122 and 124. The voltage sources 122 and 124 are electrically coupled in series at a neutral point terminal O and are arranged between the positive input terminal P and the negative input terminal N. Furthermore, the switch circuit 130 is disposed between the neutral point terminal O and the output terminal AC. In one embodiment, the neutral point terminal O is electrically coupled to a ground terminal.

Moreover, the voltage clamp circuit 140a is electrically coupled to the output terminal AC, the neutral point terminal O, and the positive input terminal P, and the voltage clamp circuit 140a is configured to clamp a voltage across the switch circuit 130. In one embodiment, the voltage clamp circuit 140a can include terminals A, B, and C. The terminal A is electrically coupled to the neutral point terminal O, the terminal B is electrically coupled to the output terminal AC, and the terminal C is electrically coupled to the positive input terminal P.

Illustratively, in some embodiments, the "voltage clamp circuit" in the present disclosure can be independently configured as a charging/discharging circuit to clamp the voltage across the switch circuit 130. In some other embodiments, the "voltage clamp circuit" in the present disclosure can be configured with a charging/discharging circuit therein, in which in the condition of the switch circuit 130 being switched off, the charging/discharging circuit is configured to perform corresponding charging and discharging operation according to the voltage across the switch circuit 130. In other words, descriptions related to the voltage clamp circuit in the following embodiments can be referred to as the aforementioned charging/discharging circuit.

Fig. 1B is a schematic diagram of a converter according to a second embodiment of the present disclosure. Compared to the embodiment illustrated in Fig. 1A, in the converter 100b in Fig. 1B, the voltage clamp circuit 140b is electrically coupled to the output terminal AC, the neutral point terminal O, and the negative input terminal N, and the voltage clamp circuit 140b is configured to clamp the voltage across the switch circuit 130. In practice, the converter 100a or the converter 100b can be a T-type neutral-point-clamped (TNPC) converter.

Similarly, in one embodiment, the voltage clamp circuit 140b can include terminals A, B, and C. The terminal A is electrically coupled to the neutral point terminal O, the terminal B is electrically coupled to the output terminal AC, and the terminal C is electrically coupled to the negative input terminal N.

In practice, it is better when the distance from any one of the terminals A and B to the switch circuit 130 is closer, and the terminal C which is coupled to the positive input terminal P or the negative input terminal N can be considered as a discharging terminal.

In some embodiments, the switch unit 112 includes a switch S1 and a diode D1 which are anti-parallelly coupled with each other. The switch unit 114 includes a switch S2 and a diode D2 which are anti-parallelly coupled with each other. In practice, each of the switches S1 and S2 can be implemented by insulated gate bipolar transistor (IGBT), metal-oxide semiconductor field effect transistor (MOSFET), other type of transistor, or the combination thereof. Each of the voltage sources 122 and 124 can be implemented by an energy storing device such as capacitor, battery, etc.

In operation, when the switch circuit 130 is switched on, the voltage at the output terminal AC is pulled down to a voltage at the neutral point terminal O, e.g., a ground voltage, and when the switch circuit 130 is switched off, voltage spikes corresponding to the switch circuit 130 are generated in a transient period of the switch circuit 130 being switched off, and at the moment, the aforementioned voltage clamp circuit 140a or 140b clamps the voltage across the switch circuit 130, thus preventing the switch circuit 130 from being affected by the voltage spikes.

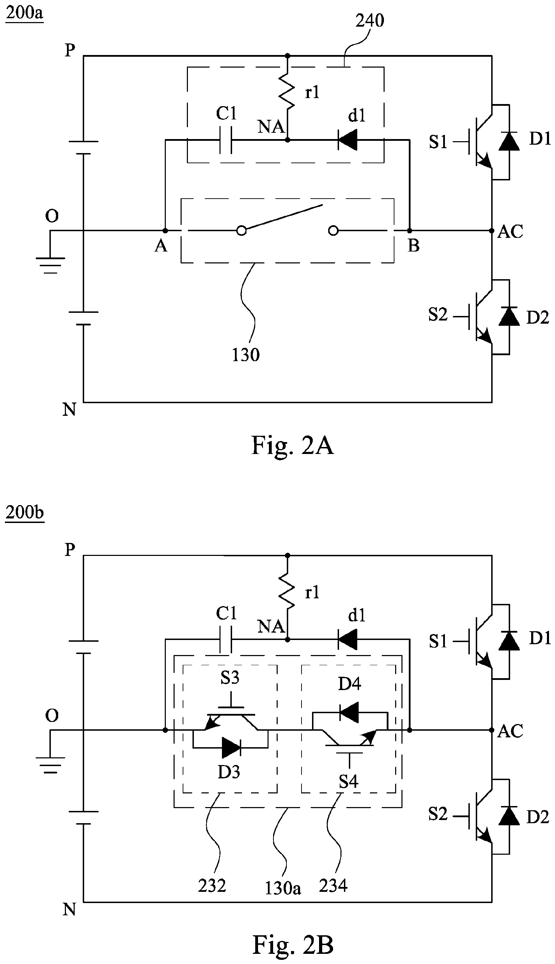

Fig. 2A is a schematic diagram of a converter according to a third embodiment of the present disclosure. Compared to the embodiment illustrated in Fig. 1A, the voltage clamp circuit 240 illustrated in Fig. 2A includes a capacitor C1, a resistor r1 and a diode d1. The capacitor C1 and the diode d1 are electrically coupled in series at a node NA and arranged between the output terminal AC and the neutral point terminal O. The resistor r1 is disposed between the node NA and the positive input terminal P. As illustrated in Fig. 2A, two terminals of the capacitor C1 are electrically coupled to the neutral point terminal O and the node NA, respectively, and the cathode and anode of the diode d1 are electrically coupled to the node NA and the output terminal AC, respectively.

Illustratively, the "diode" in the present disclosure can be indicative of a practical diode device, or can also be indicative of a diode implemented by switch element, such as metal-oxide semiconductor field effect transistor (MOSFET), bipolar junction transistor (BJT), or other type of transistor. In other words, the "diode" in the present disclosure can be replaced by switch element (including active switch or passive switch). Thus, the present disclosure is not limited to the embodiments illustrated in the figures.

For circuit configurations, the capacitor C1 and the diode d1 can be configured as a charging circuit which is coupled in parallel with the switch circuit 130 and cooperates with the switch circuit 130, and the resistor r1 can be configured as a discharging circuit which cooperates with the charging circuit.

Fig. 2B is a schematic diagram of a converter according to a fourth embodiment of the present disclosure. Compared to the embodiment illustrated in Fig. 2A, the switch circuit 130a includes switch units 232 and 234 which are anti-serially coupled between the output terminal AC and the neutral point terminal O. In one embodiment, the switch unit 232 includes a switch element S3 and a diode D3 which are anti-parallelly coupled with each other, and the switch unit 234 includes a switch element S4 and a diode D4 which are anti-parallelly coupled with each other. The switch elements S3 and S4 are anti-serially coupled between the neutral point terminal O and the output terminal AC. Hereinafter, the manner that the switch elements S3 and S4 are anti-serially coupled can be illustrated below; in the condition that each of the switch elements S3 and S4 is, for example, an insulated gate bipolar transistor (IGBT). The collector of the switch element S3 is electrically coupled to the collector of the switch element S4. The emitter of the switch element S3 is electrically coupled to the neutral point terminal O, and the emitter of the switch element S4 is electrically coupled to the output terminal AC.

In practice, the switch elements S3 and S4 can be implemented by insulated gate bipolar transistor (IGBT), metal-oxide semiconductor field effect transistor (MOSFET), other type of transistor, or the combination thereof.

In one embodiment, as illustrated in Fig. 2B, in the condition that the switch elements S3 and S4 are IGBTs, the collectors of the two IGBTs are electrically coupled with each other. In another embodiment, in the condition that the switch elements S3 and S4 are MOSFETs, the drains of the two MOSFETs are electrically coupled with each other.

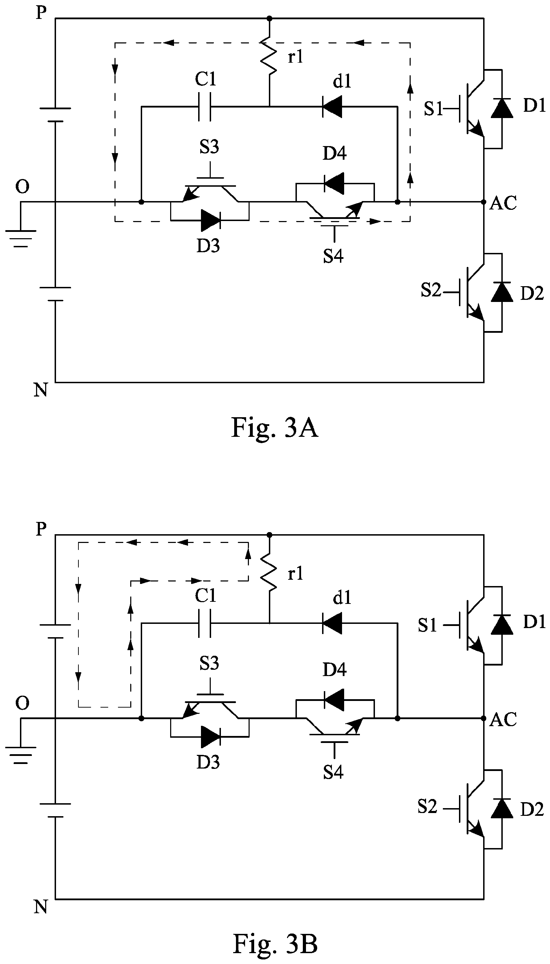

Figs. 3A-3B are operation diagrams of the converter illustrated in Fig. 2B, according to one embodiment of the present disclosure. As illustrated in Fig. 3A, in the condition of the switch element S4 being switched on, when the switch element S3 is switched off, voltage spikes corresponding to the switch element S3 are generated, and at the moment, the capacitor C1 and the diode d1 are operated as a charging circuit, and the voltage spikes are absorbed by the capacitor C1 through the diode d1 along a charging loop indicated by the dashed arrow line, and the capacitor C1 stores electrical energy corresponding to the voltage spikes. Moreover, as illustrated in Fig. 3B, the electrical energy stored by the capacitor C1 is discharged through the resistor r1 and the positive input terminal P along a discharging loop indicated by the dashed arrow line. As a result, the voltage clamp operation corresponding to the switch element S3 (or the diode D3) can be performed effectively, such that the switch element S3 can be prevented from being affected by the voltage spikes and from being damaged. The voltage clamp operation corresponding to the switch element S4 (or the diode D4) is similar to that mentioned above, and thus it is not further detailed herein.

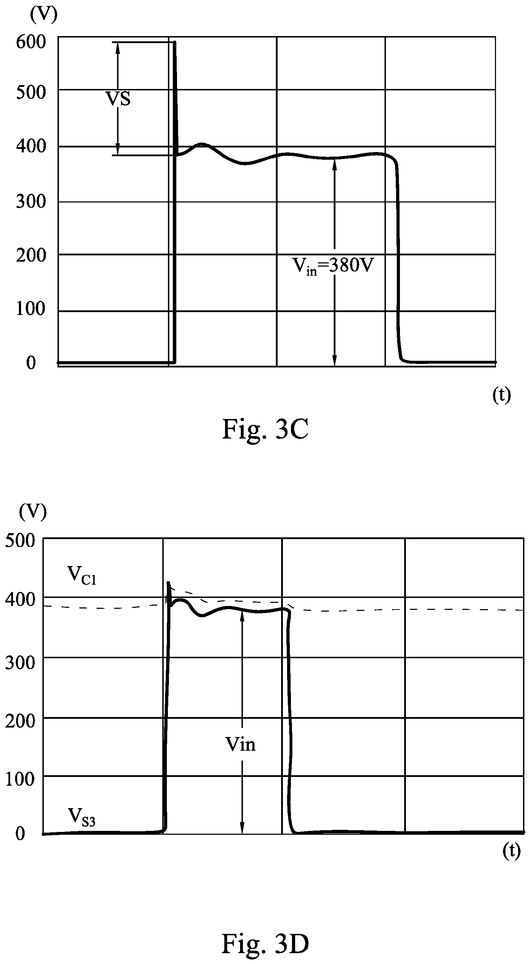

Fig. 3C is a variation diagram of the voltage corresponding to the switch without voltage clamp operation in the conventional art. As illustrated in Fig. 3C, when the input voltage Vin is 380 Volts, the voltage spike VS may reach up to 600 Volts and is much higher than a rated voltage sustainable for the switch, further causing damages to the switch.

Fig. 3D is a variation diagram of voltages in the converter as illustrated in Fig. 2B, according to one embodiment of the present disclosure. Compared to Fig. 3C, a voltage VC1 stored in the capacitor C1 increases slightly due to the capacitor C1 absorbing the voltage spike, and the voltage clamp operation can be performed effectively through the capacitor C1, and thus the influence of the voltage spike on the voltage VS3 across the switch element S3 can be significantly reduced.

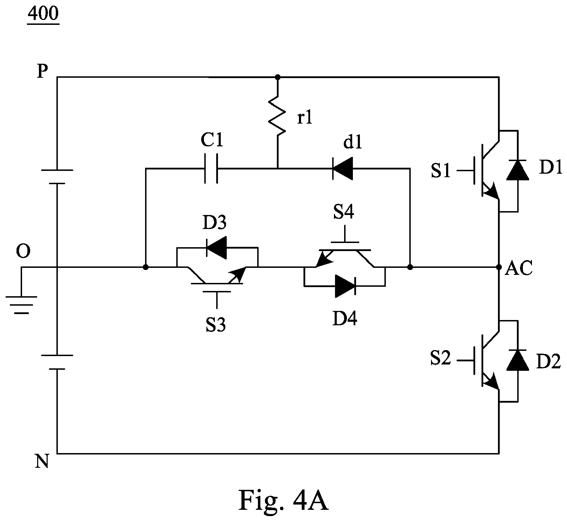

Fig. 4A is a schematic diagram of a converter according to a fifth embodiment of the present disclosure. Compared to the embodiment illustrated in Fig. 2B, the switch elements S3 and S4 in the converter 400 illustrated in Fig. 4A are anti-serially coupled by a different manner. Specifically, in one embodiment, in the condition that the switch elements S3 and S4 are IGBTs, the emitters of the two IGBTs are electrically coupled with each other, as illustrated in Fig. 4A. In another embodiment, in the condition that the switch elements S3 and S4 are MOSFETs, the sources of the two MOSFETs are electrically coupled with each other.

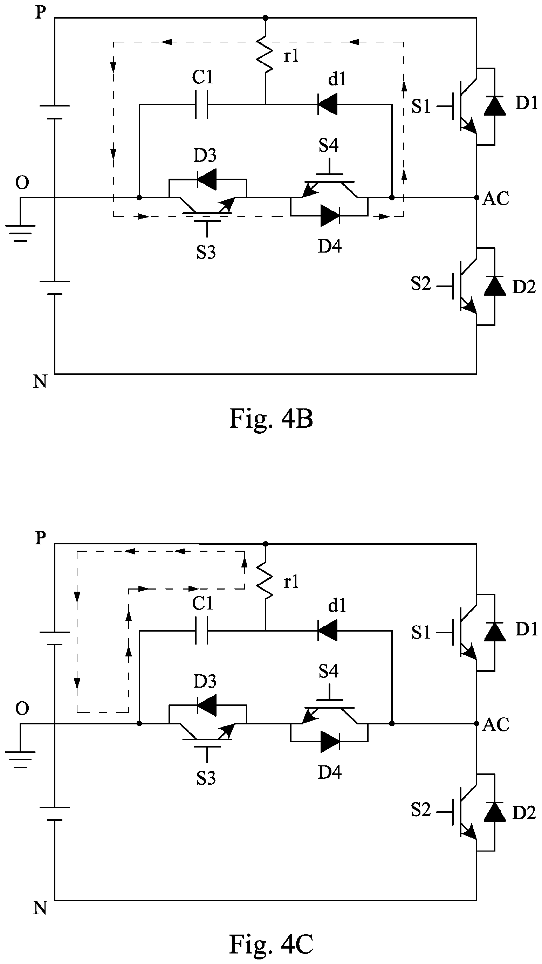

Figs. 4B-4C are operation diagrams of the converter illustrated in Fig. 4A, according to one embodiment of the present disclosure. As illustrated in Fig. 4B, in the condition of the switch element S3 being switched on, when the switch element S4 is switched off, voltage spikes corresponding to the switch element S4 are generated, and at the moment, the voltage spikes are absorbed by the capacitor C1 through the diode d1 along a charging loop indicated by the dashed arrow line, and the capacitor C1 stores electrical energy corresponding to the voltage spikes. Moreover, as illustrated in Fig. 4C, the electrical energy stored by the capacitor C1 is discharged through the resistor r1 and the positive input terminal P along a discharging loop indicated by the dashed arrow line. As a result, the voltage clamp operation corresponding to the switch element S4 (or the diode D4) can be performed effectively, such that the switch element S4 can be prevented from being affected by the voltage spikes and from being damaged. The voltage clamp operation corresponding to the switch element S3 (or the diode D3) is similar to the aforementioned description, and thus it is not further detailed herein. In addition, variations of the voltages in the converter 400 as illustrated in Fig. 4A are similar to those as illustrated in Fig. 3D, and thus they are not further detailed herein.

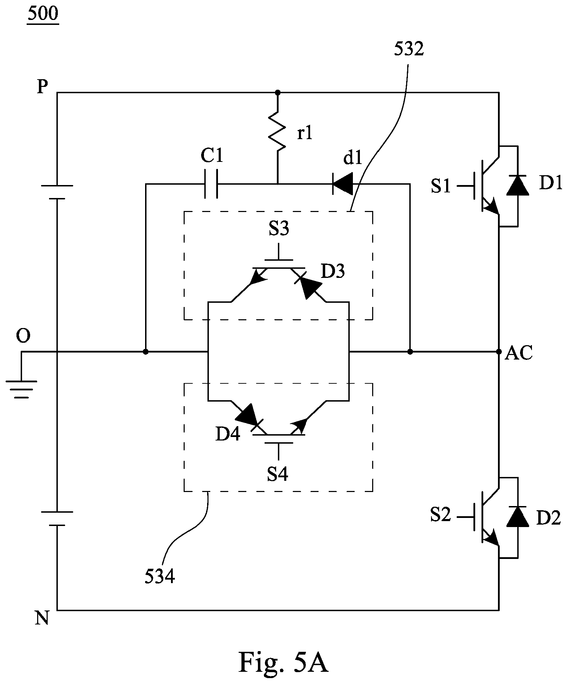

Fig. 5A is a schematic diagram of a converter according to a sixth embodiment of the present disclosure. Compared to the embodiment illustrated in Fig. 2B, the switch units 532 and 534 in Fig. 5A are anti-parallelly coupled between the output terminal AC and the neutral point terminal O. In one embodiment, the switch unit 532 includes the switch element S3 and the diode D3 which are anti-serially coupled with each other, and the switch unit 534 includes the switch element S4 and the diode D4 which are anti-serially coupled with each other. Hereinafter, the manner that the switch units 532 and 534 are anti-serially coupled can be illustrated below; in the condition that each of the switch elements S3 and S4 is, for example, an insulated gate bipolar transistor (IGBT), the collector of the switch element S3 is electrically coupled through the diode D3 to the emitter of the switch element S4 at the output terminal AC, and the collector of the switch element S4 is electrically coupled through the diode D4 to the emitter of the switch element S3 at the neutral point terminal O.

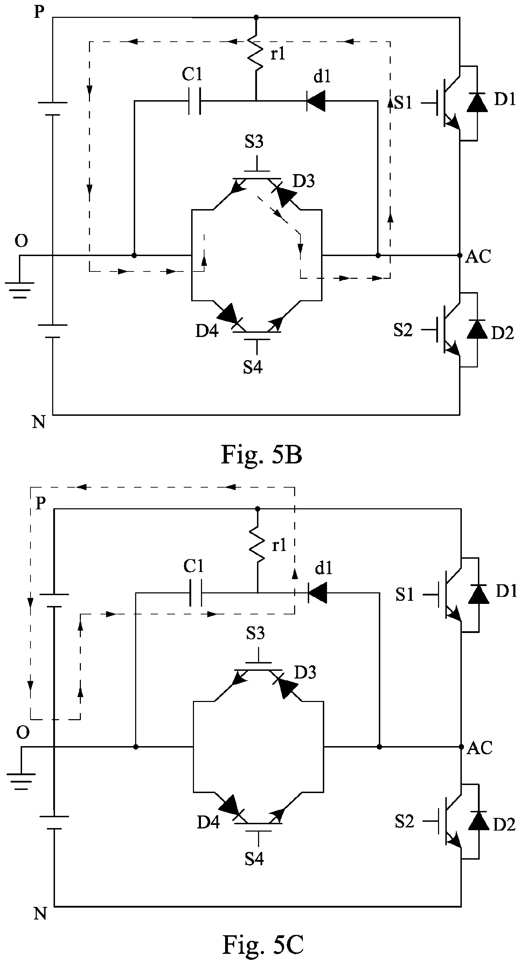

Figs. 5B-5C are operation diagrams of the converter illustrated in Fig. 5A, according to one embodiment of the present disclosure. As illustrated in Fig. 5B, in the condition of the switch element S4 being switched on, when the switch element S3 is switched off, voltage spikes corresponding to the switch element S3 are generated. At the moment, the diode D3 is conducted, and the voltage spikes are absorbed by the capacitor C1 through the diodes D3 and d1 along the charging loop indicated by the dashed arrow line, and the capacitor C1 stores electrical energy corresponding to the voltage spikes. Moreover, as illustrated in Fig. 5C, the electrical energy stored by the capacitor C1 is discharged through the resistor r1 and the positive input terminal P along the discharging loop indicated by the dashed arrow line. As a result, the voltage clamp operation corresponding to the switch element S3 (or the diode D3) can be performed effectively, such that the switch element S3 can be prevented from being affected by the voltage spikes and from being damaged. On the other hand, the voltage clamp operation corresponding to the switch element S4 (or the diode D4) is similar to the aforementioned description, and thus it is not further detailed herein.

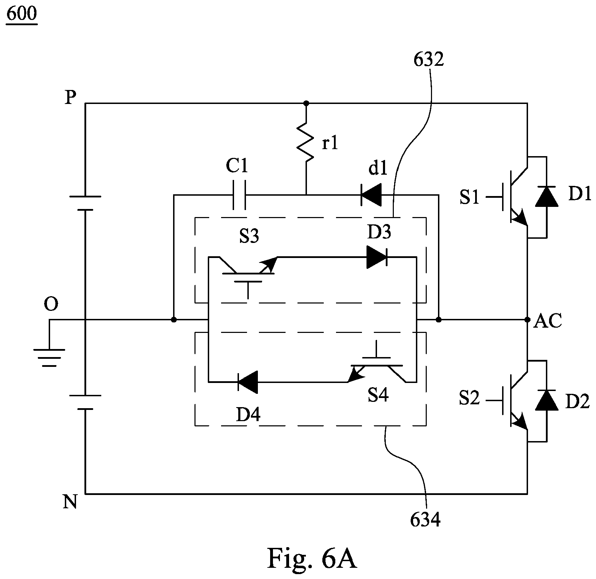

Fig. 6A is a schematic diagram of a converter according to a seventh embodiment of the present disclosure. Compared to the embodiment illustrated in Fig. 2B, the switch units 632 and 634 in Fig. 6A are anti-parallelly coupled between the output terminal AC and the neutral point terminal O. In one embodiment, the switch unit 632 includes the switch element S3 and the diode D3 which are anti-serially coupled with each other, and the switch unit 634 includes the switch element S4 and the diode D4 which are anti-serially coupled with each other.

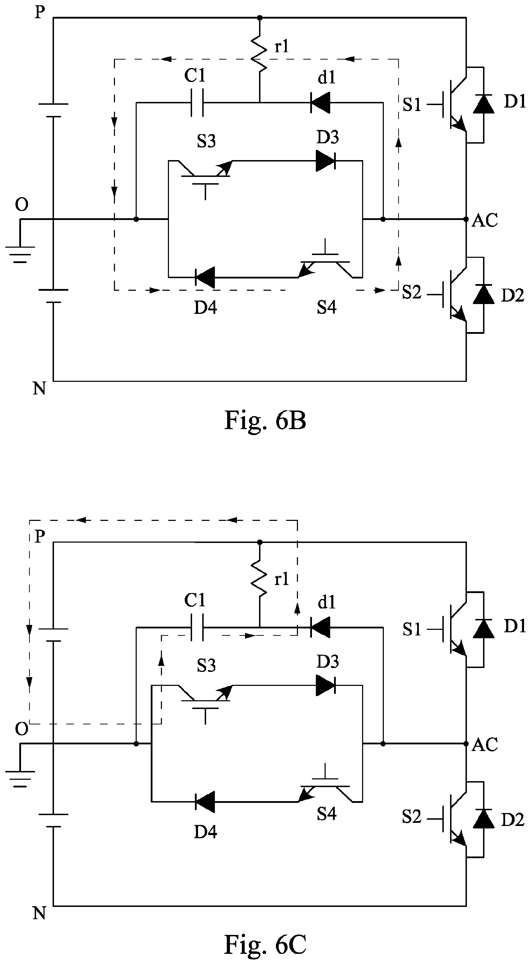

Figs. 6B-6C are operation diagrams of the converter illustrated in Fig. 6A, according to one embodiment of the present disclosure. As illustrated in Fig. 6B, in the condition of the switch element S3 being switched on, when the switch element S4 is switched off, voltage spikes corresponding to the switch element S4 are generated. At the moment, the diode D4 is conducted, and the voltage spikes are absorbed by the capacitor C1 through the diodes D4 and d1 along the charging loop indicated by the dashed arrow line, and the capacitor C1 stores electrical energy corresponding to the voltage spikes. Moreover, as illustrated in Fig. 6C, the electrical energy stored by the capacitor C1 is discharged through the resistor r1 and the positive input terminal P along the discharging loop indicated by the dashed arrow line. As a result, the voltage clamp operation corresponding to the switch element S4 (or the diode D4) can be performed effectively, such that the switch element S3 can be prevented from being affected by the voltage spikes and from being damaged. On the other hand, the voltage clamp operation corresponding to the switch element S3 (or the diode D3) is similar to the aforementioned description, and thus it is not further detailed herein.

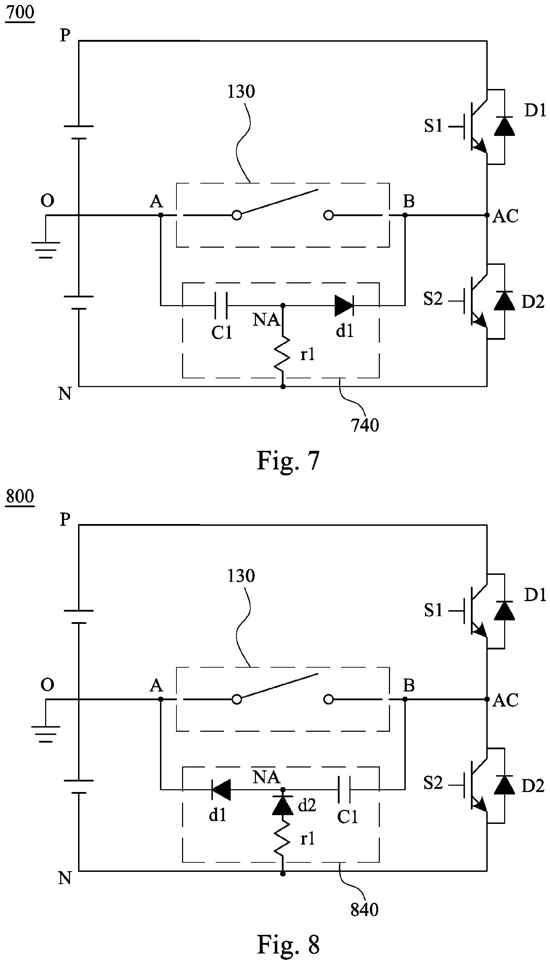

Fig. 7 is a schematic diagram of a converter according to an eighth embodiment of the present disclosure. Compared to the embodiment illustrated in Fig. 2A, in the converter 700 illustrated in Fig. 7, the capacitor C1 and the diode d1 in the voltage clamp circuit 740 are electrically coupled in series at the node NA and arranged between the output terminal AC and the neutral point terminal O, and the resistor r1 is disposed between the node NA and the negative input terminal N. Specifically, as illustrated in Fig. 7, the two terminals of the capacitor C1 are electrically coupled to the neutral point terminal O and the node NA, respectively, and the cathode and anode of the diode d1 are electrically coupled to the output terminal AC and the node NA, respectively.

In operation, the voltage clamp operation in the converter 700 is similar to that mentioned above, and the difference therebetween lies in that the electrical energy stored by the capacitor C1 is discharged to the negative input terminal N and the resistor r1.

Illustratively, the specific circuit structure of the switch circuit 130 in the converter 700 can be configured as that in the aforementioned embodiment, and voltages across the switch element and the diode in the switch circuit 130 can be clamped through the voltage clamp circuit 740, such that they can be prevented from being affected by the voltage spikes and from being damaged, and thus it is not further detailed herein.

Fig. 8 is a schematic diagram of a converter according to a ninth embodiment of the present disclosure. Compared to the embodiment illustrated in Fig. 7, in the converter 800 illustrated in Fig. 8, the voltage clamp circuit 840 includes a capacitor C1, a resistor r1, and diodes d1 and d2. The diode d1 and the capacitor C1 are electrically coupled in series at the node NA and arranged between the output terminal AC and the neutral point terminal O. The diode d2 and the resistor r1 are electrically coupled in series between the node NA and the negative input terminal N. Specifically, as illustrated in Fig. 8, the two terminals of the capacitor C1 are electrically coupled to the node NA and the output terminal AC, respectively, and the cathode and anode of the diode d1 are electrically coupled to the neutral point terminal O and the node NA, respectively, and the cathode and anode of the diode d2 are electrically coupled to the node NA and the resistor r1, and the two terminals of the resistor r1 are electrically coupled to the diode d2 and the negative input terminal N.

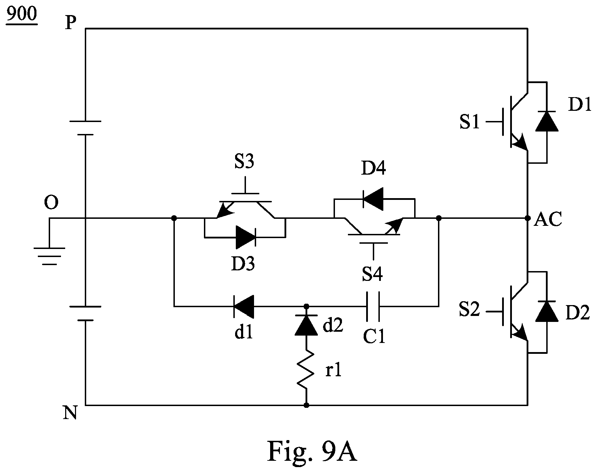

Fig. 9A is a schematic diagram of a converter according to a tenth embodiment of the present disclosure. Compared to the embodiment illustrated in Fig. 8, in the converter 900 illustrated in Fig. 9A, the switch circuit can include the switch element S3 and the diode D3 which are anti-parallelly coupled with each other and the switch element S4 and the diode D4 which are anti-parallelly coupled with each other. Moreover, the converter 900 illustrated in Fig. 9A is substantially similar to the converter 200b illustrated in Fig. 2B, and the difference therebetween lies in that the configurations of the voltage clamp circuits are different.

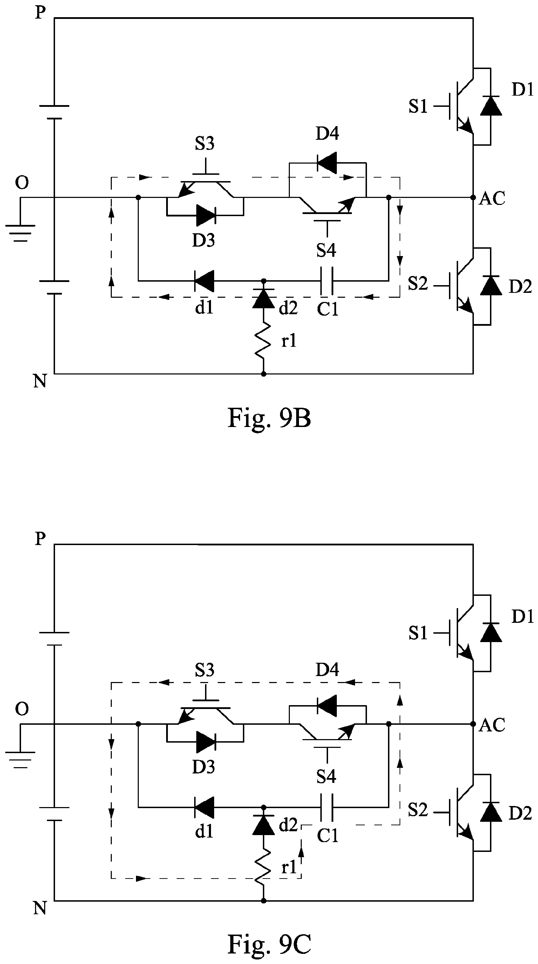

Figs. 9B-9C are operation diagrams of the converter illustrated in Fig. 9A, according to one embodiment of the present disclosure. As illustrated in Fig. 9B, in the condition of the switch element S4 being switched on, when the switch element S3 is switched off, voltage spikes corresponding to the switch element S3 are generated, and the voltage spikes are absorbed by the capacitor C1 through the diode d1 along the charging loop indicated by the dashed arrow line, and the capacitor C1 stores electrical energy corresponding to the voltage spikes. Moreover, as illustrated in Fig. 9C, the electrical energy stored by the capacitor C1 is discharged through the diode D4, the switch-on switch element S3, the negative input terminal N, the resistor r1, and the diode d2 along the discharging loop indicated by the dashed arrow line. As a result, the voltage clamp operation corresponding to the switch element S3 (or the diode D3) can be performed effectively. On the other hand, the voltage clamp operation corresponding to the switch element S4 (or the diode D4) is similar to that mentioned above, and thus it is not further detailed herein.

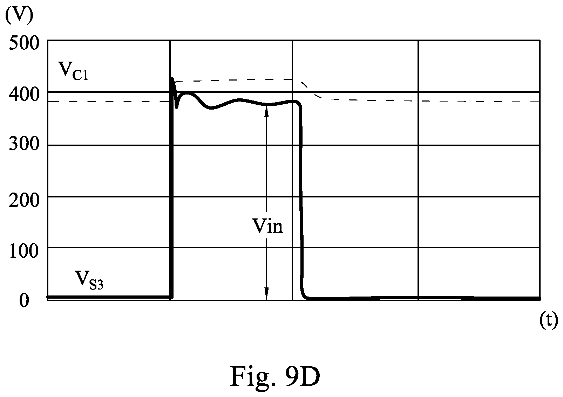

Fig. 9D is a variation diagram of voltages in the converter as illustrated in Fig. 9A, according to one embodiment of the present disclosure. As illustrated in Fig. 9D, the voltage VC1 stored in the capacitor C1 increases slightly due to the capacitor C1 absorbing the voltage spike, and the voltage clamp operation can be performed effectively through the capacitor C1, and thus the influence of the voltage spike on the voltage VS3 across the switch element S3 can be significantly reduced.

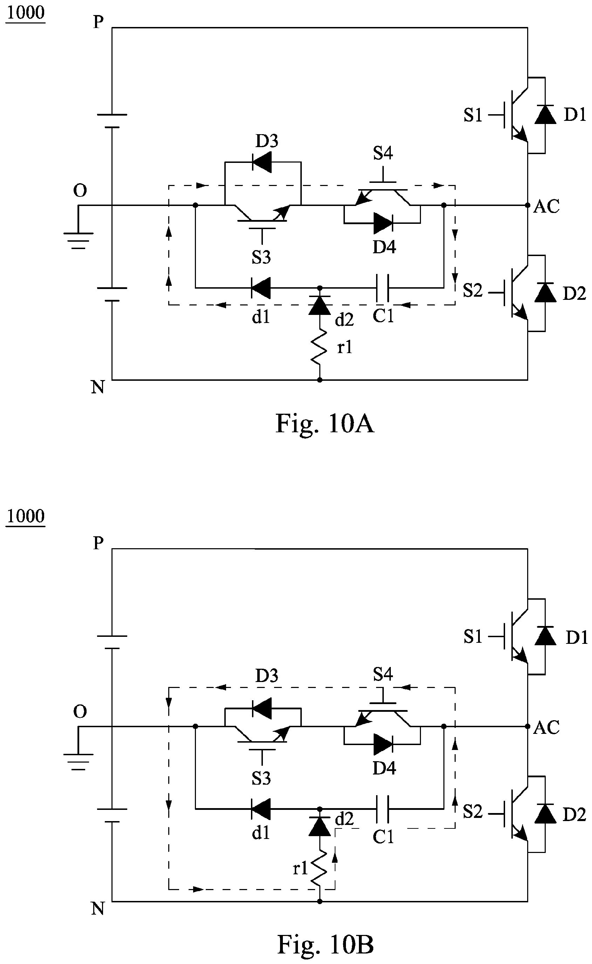

Figs. 10A-10B are schematic diagrams of a converter and the operations thereof, according to an eleventh embodiment of the present disclosure. Compared to Fig. 9A, the switch elements S3 and S4 and the diodes D3 and D4 in the converter 1000 illustrated in Fig. 10A or Fig. 10B are coupled with each other similar to the manner illustrated in Fig. 4A.

Similarly, as illustrated in Figs. 10A-10B, in the condition of the switch element S3 being switched on, when the switch element S4 is switched, voltage spikes corresponding to the switch element S4 are absorbed by the capacitor C1, and the electrical energy stored by the capacitor C1 is discharged through the negative input terminal N, the resistor r1, and the diode d2. As a result, the voltage clamp operation corresponding to the switch element S4 (or the diode D4) can be performed effectively. On the other hand, the voltage clamp operation corresponding to the switch element S3 (or the diode D3) is similar to that mentioned above, and thus it is not further detailed herein.

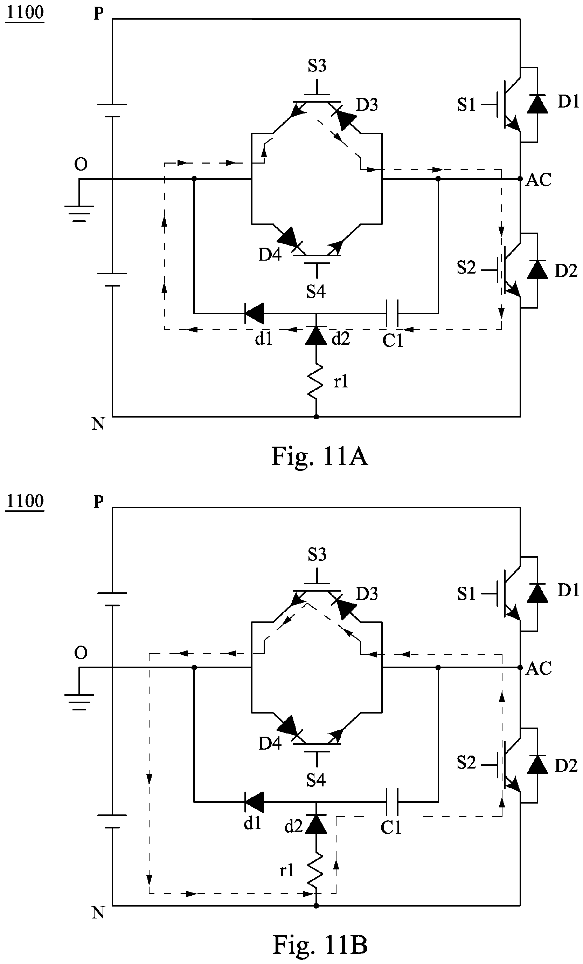

Figs. 11A-11B are schematic diagrams of a converter and the operations thereof, according to a twelfth embodiment of the present disclosure. Compared to Fig. 9A, the switch elements S3 and S4 and the diodes D3 and D4 in the converter 1100 illustrated in Fig. 10A or Fig. 10B are coupled with each other similar to the manner illustrated in Fig. 5A.

Similarly, as illustrated in Figs. 11A-11B, when the switch element S3 is switched, voltage spikes corresponding to the switch element S3 are absorbed by the capacitor C1, and the electrical energy stored by the capacitor C1 is discharged through the negative input terminal N, the resistor r1, and the diode d2. As a result, the voltage clamp operation corresponding to the switch element S3 (or the diode D3) can be performed effectively. On the other hand, the voltage clamp operation corresponding to the switch element S4 (or the diode D4) is similar to that mentioned above, and thus it is not further detailed herein.

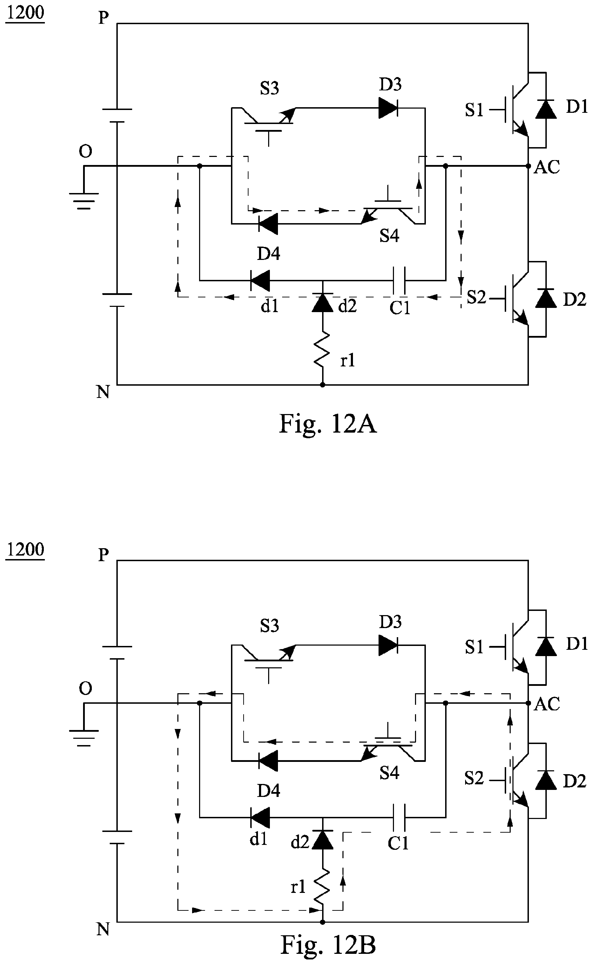

Figs. 12A-12B are schematic diagrams of a converter and the operations thereof, according to a thirteenth embodiment of the present disclosure. Compared to Fig. 9A, the switch elements S3 and S4 and the diodes D3 and D4 in the converter 1200 illustrated in Fig. 12A or Fig. 12B are coupled with each other similar to the manner illustrated in Fig. 6A.

Similarly, as illustrated in Figs. 12A-12B, when the switch element S4 is switched, voltage spikes corresponding to the switch element S4 are absorbed by the capacitor C1, and the electrical energy stored by the capacitor C1 is discharged through the negative input terminal N, the resistor r1, and the diode d2. As a result, the voltage clamp operation corresponding to the switch element S4 (or the diode D4) can be performed effectively. On the other hand, the voltage clamp operation corresponding to the switch element S3 (or the diode D3) is similar to that mentioned above, and thus it is not further detailed herein.

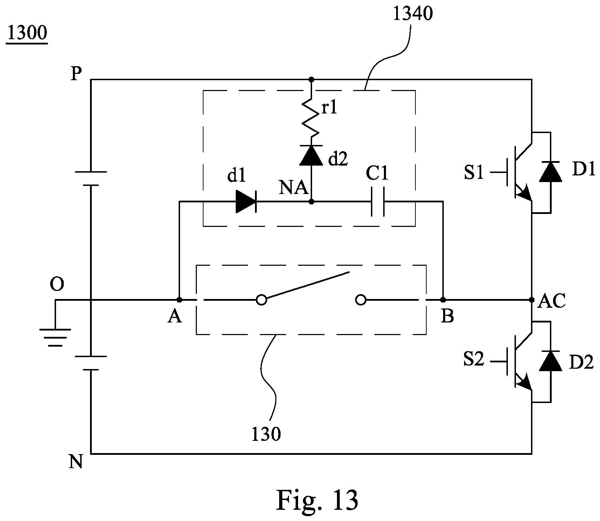

Fig. 13 is a schematic diagram of a converter and the operation thereof, according to a fourteenth embodiment of the present disclosure. Compared to Fig. 2A, in the converter 1300 illustrated in Fig. 13, the voltage clamp circuit 1340 includes the capacitor C1, the resistor r1, and the diodes d1 and d2. The diode d1 and the capacitor C1 are electrically coupled in series at the node NA and arranged between the output terminal AC and the neutral point terminal O. The diode d2 and the resistor r1 are electrically coupled in series between the node NA and the positive input terminal P. Specifically, the two terminals of the capacitor C1 are electrically coupled to the output terminal AC and the node NA, respectively, and the cathode and anode of the diode d1 are electrically coupled to the node NA and the neutral point terminal O, respectively, and the cathode and anode of the diode d2 are electrically coupled to the resistor r1 and the node NA, and the two terminals of the resistor r1 are electrically coupled to the diode d2 and the positive input terminal P.

In operation, the voltage clamp operation in the converter 1300 is similar to that mentioned above, and the difference therebetween lies in that the electrical energy corresponding to the voltage spikes, stored by the capacitor C1, is discharged through the resistor r1, the diode d2 and the positive input terminal P.

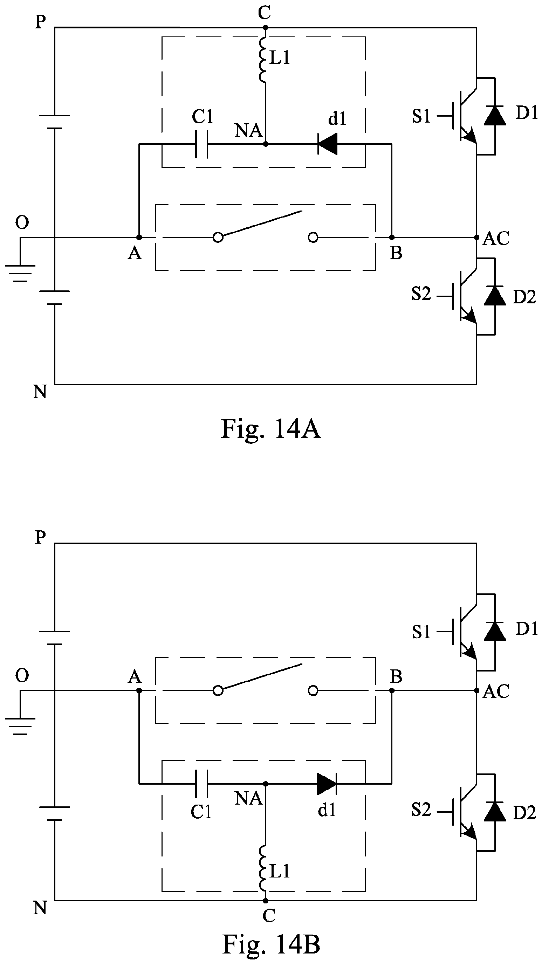

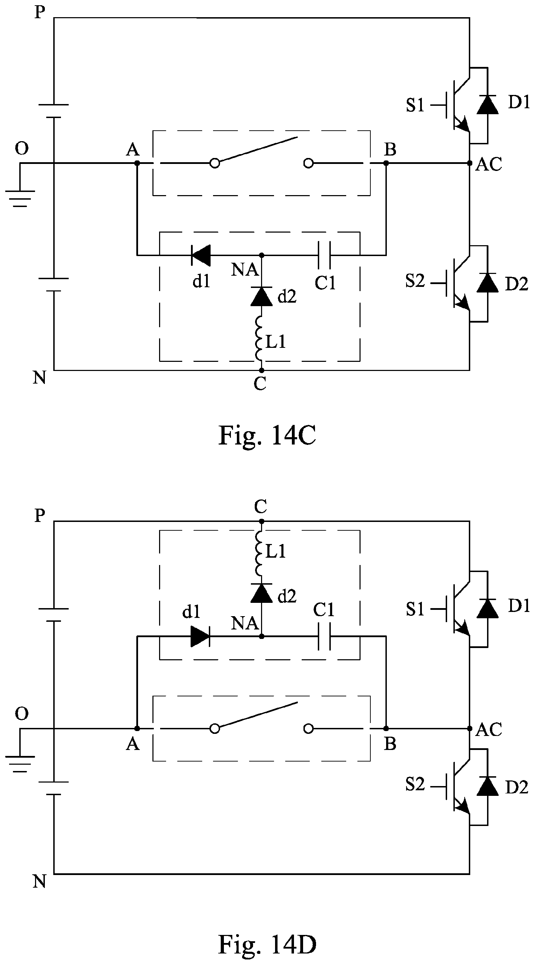

In order to reduce loss during the discharging process in the voltage clamp operation, the resistor r1 can be also replaced by an inductor. Figs. 14A-14D are schematic diagrams of converters according to a fifteenth through an eighteenth embodiments of the present disclosure. Compared to Fig. 2A, Fig. 7, Fig. 8, and Fig. 13, respectively, the voltage clamp circuit in Figs. 14A-14D includes an inductor L1 instead of the resistor r1. A terminal of the inductor L1 is electrically coupled to the positive input terminal P or the negative input terminal N, and the inductor L1 is configured as a part of the discharging circuit.

Structures of the voltage clamp circuits in Figs. 14A-14D are similar to those illustrated in the aforementioned embodiments, and thus they are not further detailed herein. In addition, operations of the voltage clamp circuits in Figs. 14A-14D are basically similar to those illustrated in the aforementioned embodiments, and thus they are not further detailed herein.

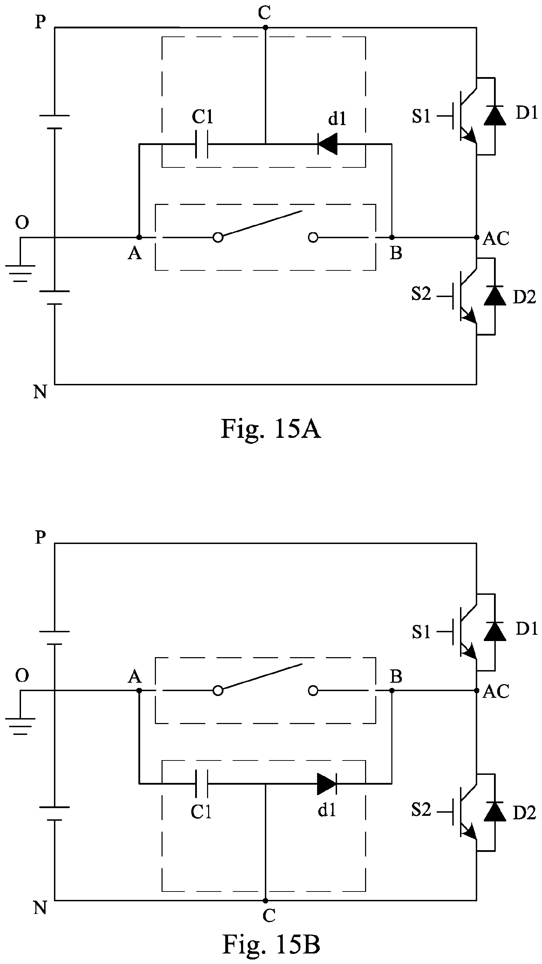

On the other hand, the inductor L1 or the resistor r1 can be also omitted, such that the circuit structure of the voltage clamp circuit is much simpler. Figs. 15A-15D are schematic diagrams of converters according to a nineteenth through a twenty-second embodiments of the present disclosure. The converters illustrated in Figs. 15A-15D are similar to those illustrated in Figs. 14A-14D, respectively, but the converters illustrated in Figs. 15A-15D do not include the inductor L1, compared to the converters illustrated in Figs. 14A-14D. As a result, the circuit structure of the voltage clamp circuit can be much simpler.

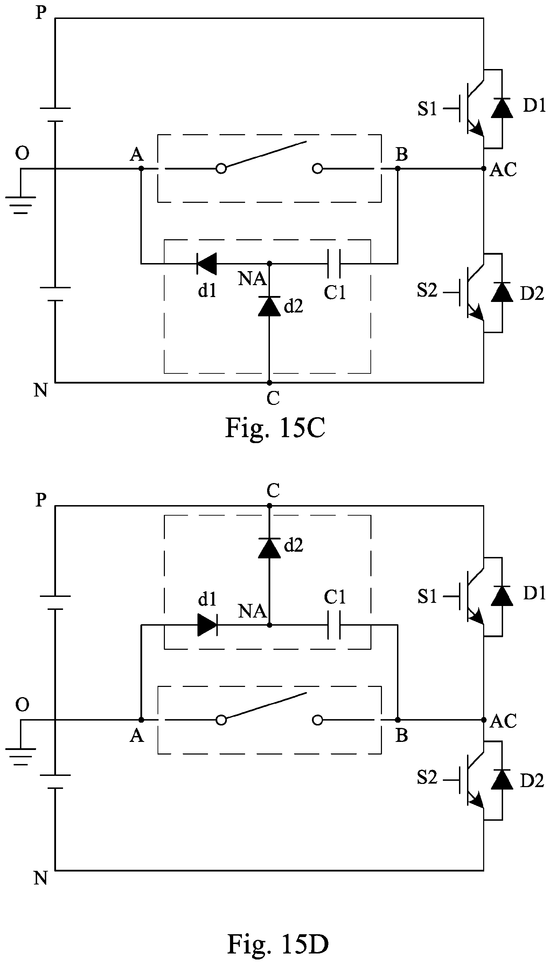

Structures of the voltage clamp circuits in Figs. 15A-15D are similar to those illustrated in the aforementioned embodiments, and thus they are not further detailed herein. However, for example in Fig. 15A or Fig. 15B, the capacitor C1 and the diode d1 are electrically coupled in series to the positive input terminal P or the negative input terminal N, and for example in Fig. 15C or Fig. 15D, the diode d2 is disposed between the node NA and the positive input terminal P or between the node NA and the negative input terminal N. In addition, operations of the voltage clamp circuits in Figs. 15A-15D are basically similar to those illustrated in the aforementioned embodiments, and thus they are not further detailed herein.

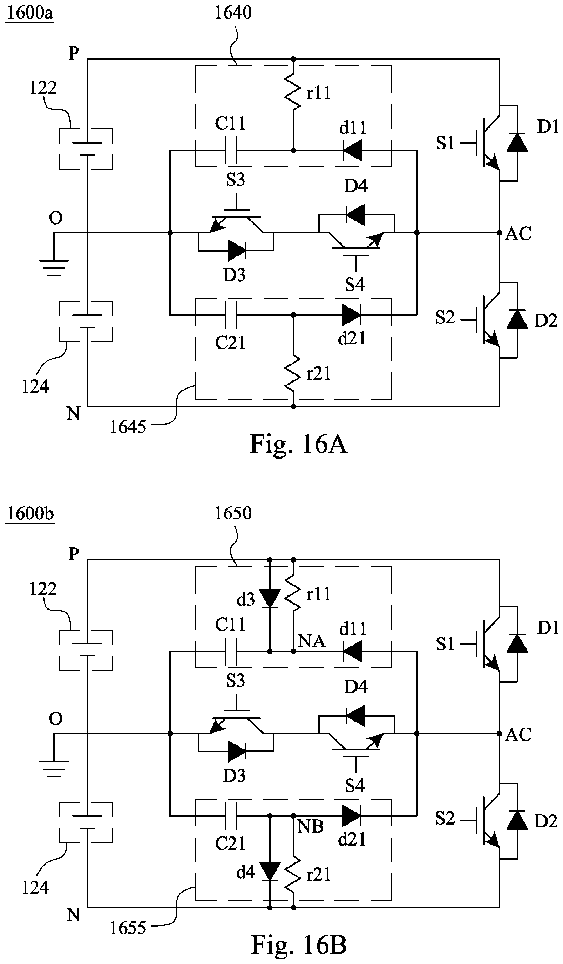

On the other hand, the voltage clamp circuits illustrated in the aforementioned embodiments can be configured independently and can be also configured together in combination. Fig. 16A is a schematic diagram of a converter according to a twenty-third embodiment of the present disclosure. Compared to Fig. 2B and Fig. 7, the converter 1600a in Fig. 16A includes two voltage clamp circuits 1640 and 1645, in which the voltage clamp circuit 1640 is similar to the voltage clamp circuit 130a in Fig. 2B, and the voltage clamp circuit 1645 is similar to the voltage clamp circuit 740 in Fig. 7.

In addition, the converter can also include various combinations of voltage clamp circuits. For example, the converter can include a combination of the voltage clamp circuit 840 in Fig. 8 and the voltage clamp circuit 1340 in Fig. 13, which is similar to that illustrated in Fig. 16A, and thus it is not further detailed herein.

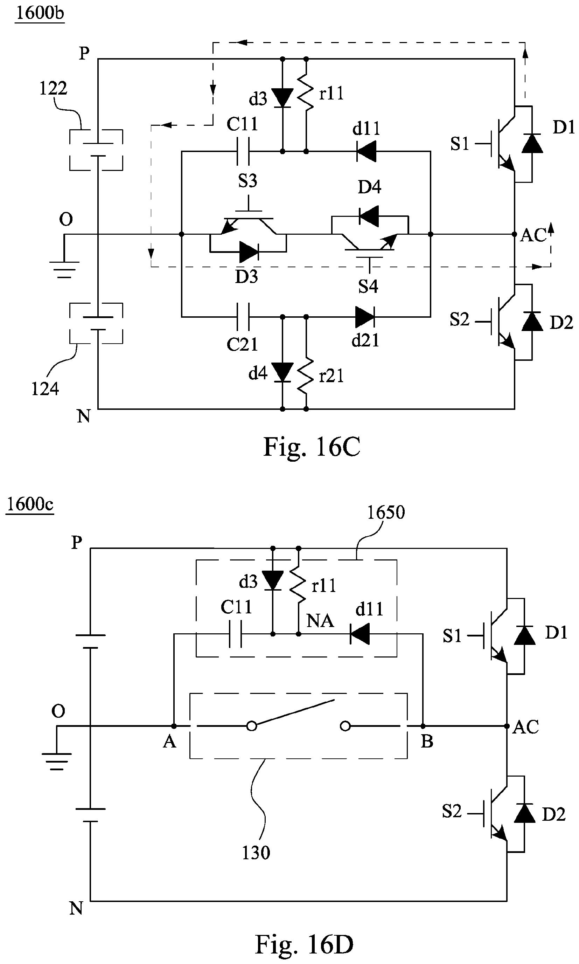

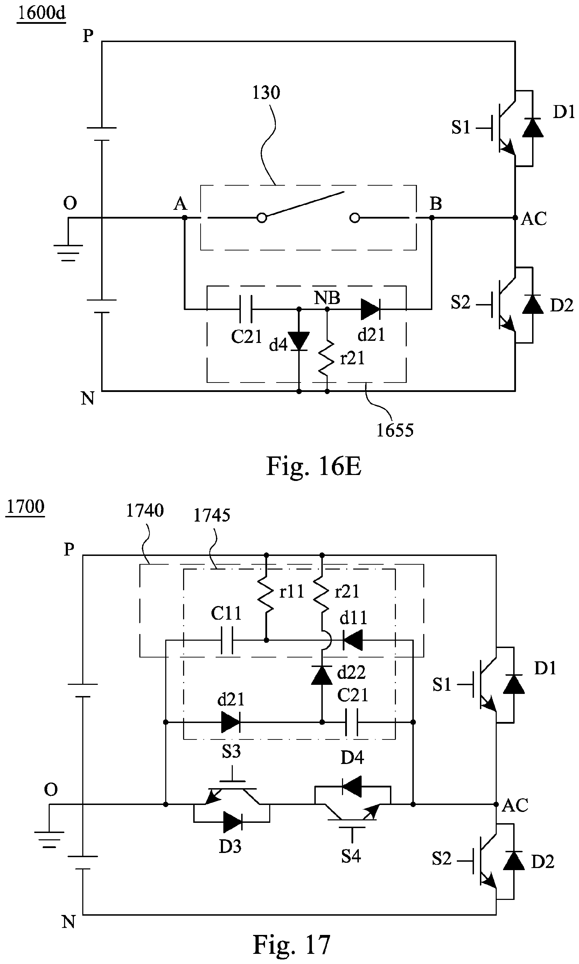

Moreover, in the combinations of the voltage clamp circuits, the resistor can be replaced by an inductor, or the aforementioned resistor and inductor can also be omitted. For example, in Fig. 16A, the resistors in the voltage clamp circuits 1640 and 1645 can be replaced by inductors, or the resistors in the voltage clamp circuits 1640 and 1645 can be omitted. In other words, the voltage clamp circuits illustrated in Figs. 14A-14D and Figs. 15A-15D can be combined and configured similar to the embodiment illustrated in Fig. 16.

Fig. 16B is a schematic diagram of a converter according to a twenty-fourth embodiment of the present disclosure. Compared to Fig. 16A, in the converter 1600b, the voltage clamp circuit 1650 further includes a diode d3, and the voltage clamp circuit 1655 further includes a diode d4, in which the diode d3 is disposed between the node NA and the positive input terminal P, and the diode d4 is disposed between the node NB and the negative input terminal N. Specifically, the anode of the diode d3 is electrically coupled to the positive input terminal P, the cathode of the diode d3 is electrically coupled to the node NA, the anode of the diode d4 is electrically coupled to the node NB, and the cathode of the diode d4 is electrically coupled to the negative input terminal N.

Fig. 16C is an operation diagram of the converter illustrated in Fig. 16B, according to one embodiment of the present disclosure. As illustrated in Fig. 16C, in operation, when the switch element S1 is switched off, the diode d3, the capacitor C11, the diode D3 and the switch element S4 are operated as a charging circuit, the capacitor C11 absorbs the voltage spikes across the switch element S1, and then the capacitor C11 discharges the absorbed electrical energy to the voltage source 122 through the resistor r11 and the positive input terminal P.

Similarly, when the switch element S2 is switched off, the diode d4, the capacitor C21, the diode D4 and the switch element S3 are operated as a charging circuit, the capacitor C21 absorbs the voltage spikes across the switch element S2, and then the capacitor C21 discharges the absorbed electrical energy to the voltage source 124 through the resistor r21 and the negative input terminal N.

As a result, the voltage clamp operations corresponding to the switch element S3 (or the diode D3) and the switch element S4 (or the diode D4) can be performed effectively, and the voltage clamp operations corresponding to the switch element S1 (or the diode D1) and the switch element S2 (or the diode D2) can be performed effectively as well, such that the aforementioned elements can be prevented from being affected by the voltage spikes and from being damaged.

In some embodiments, the voltage clamp circuits 1650 and 1655 can be configured independently, and specific explanations are made as below. Fig. 16D is a schematic diagram of a converter according to a twenty-fifth embodiment of the present disclosure. Compared to Fig. 2A, in the converter 1600c, the voltage clamp circuit 1650 further includes the diode d3 disposed between the node NA and the positive input terminal P. Specifically, the anode of the diode d3 is electrically coupled to the positive input terminal P, and the cathode of the diode d3 is electrically coupled to the node NA. In operation, the voltage clamp operations for the switch elements in the converter 1600c are similar to those mentioned above, and thus they are not further detailed herein.

Fig. 16E is a schematic diagram of a converter according to a twenty-sixth embodiment of the present disclosure. Compared to Fig. 7, in the converter 1600d, the voltage clamp circuit 1655 further includes a diode d4 disposed between the node NB and the negative input terminal N. Specifically, the anode of the diode d4 is electrically coupled to the node NB, and the cathode of the diode d3 is electrically coupled to the negative input terminal N. In operation, the voltage clamp operations for the switch elements in the converter 1600d are similar to those mentioned above, and thus they are not further detailed herein.

Fig. 17 is a schematic diagram of a converter according to a twenty-seventh embodiment of the present disclosure. Compared to Fig. 16A, the converter 1700 in Fig. 17 includes two voltage clamp circuits 1740 and 1745 which are electrically coupled to the positive input terminal P. Moreover, compared to Fig. 2B and Fig. 13, the voltage clamp circuit 1740 in the converter 1700 is similar to the voltage clamp circuit 130a in Fig. 2B, and the voltage clamp circuit 1745 in the converter 1700 is similar to the voltage clamp circuit 1340 in Fig. 13.

In addition, the converter can also include various combinations of voltage clamp circuits. For example, the converter can include a combination of the voltage clamp circuit 740 in Fig. 7 and the voltage clamp circuit 840 in Fig. 8, which is similar to that illustrated in Fig. 17, and thus it is not further detailed herein.

Furthermore, in the combinations of the aforementioned voltage clamp circuits, the resistor can be also replaced by an inductor, or the aforementioned resistor and inductor can be also omitted. For example, in Fig. 17, the resistors in the voltage clamp circuits 1740 and 1745 can be replaced by inductors, or the resistors in the voltage clamp circuits 1740 and 1745 can be omitted. In other words, the voltage clamp circuits illustrated in Figs. 14A-14D and Figs. 15A-15D can be combined and configured similar to the embodiment illustrated in Fig. 17.

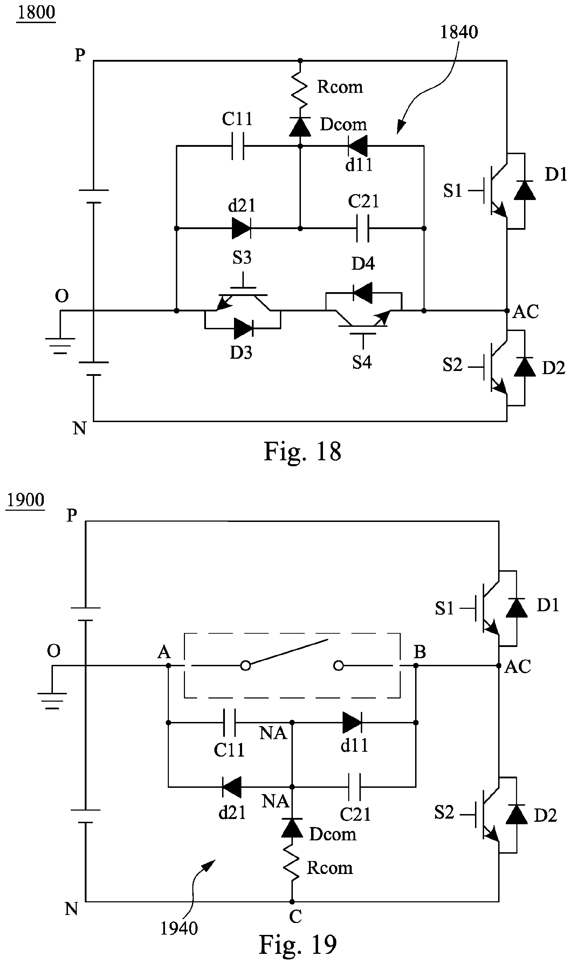

Fig. 18 is a schematic diagram of a converter according to a twenty-eighth embodiment of the present disclosure. Compared to Fig. 17, in the converter 1800 in Fig. 18, the voltage clamp circuit 1840 includes capacitors C11 and C21, diodes d11, d21 and Dcom, and a resistor Rcom. The capacitor C11 and the diode d11 are electrically coupled in series at the node NA and arranged between the output terminal AC and the neutral point terminal O. Two terminals of the capacitor C11 are electrically coupled to the neutral point terminal O and the node NA, respectively, and the cathode and anode of the diode d11 are electrically coupled to the node NA and the output terminal AC, respectively. The capacitor C21 and the diode d21 are electrically coupled in series at the node NA and arranged between the output terminal AC and the neutral point terminal O. Two terminals of the capacitor C21 are electrically coupled to the output terminal AC and the node NA, respectively, and the cathode and anode of the diode d21 are electrically coupled to the node NA and the neutral point terminal O, respectively. The cathode and anode of the diode Dcom are electrically coupled to the node NA and the resistor Rcom, and two terminals of the resistor Rcom are electrically coupled to the diode Dcom and the positive input terminal P, respectively.

Compared to Fig. 17, the switch elements S3 and S4 in the converter 1800 share the resistor Rcom and the diode Dcom. In operation, the voltage spikes corresponding to the switch element S3 can be absorbed by the capacitor C11, the voltage spikes corresponding to the switch element S4 can be absorbed by the capacitor C21, and the electrical energy stored by the capacitors C11 and C21 can be discharged commonly through the resistor Rcom, the diode Dcom and the positive input terminal P.

Fig. 19 is a schematic diagram of a converter according to a twenty-ninth embodiment of the present disclosure. Compared to Fig. 18, in the converter 1900 in Fig. 19, the voltage clamp circuit 1940 similarly includes the capacitors C11 and C21, the diodes d11, d21 and Dcom, and the resistor Rcom, but the voltage clamp circuit 1940 is electrically coupled to the negative input terminal N, the neutral point terminal O and the output terminal AC.

Furthermore, two terminals of the capacitor C11 are electrically coupled to the neutral point terminal O and the node NA, respectively, and the cathode and anode of the diode d11 are electrically coupled to the output terminal AC and the node NA, respectively. Two terminals of the capacitor C21 are electrically coupled to the neutral point terminal O and the node NA, respectively. The cathode and anode of the diode Dcom are electrically coupled to the node NA and the resistor Rcom, respectively, and two terminals of the resistor Rcom are electrically coupled to the diode Dcom and the negative input terminal N, respectively.

In operation, the voltage clamp operation of the voltage clamp circuit 1940 is similar to the embodiment illustrated in Fig. 18, but the electrical energy stored by the capacitors C11 and C21 is discharged commonly through the resistor Rcom, the diode Dcom and the negative input terminal N.

Similarly, in the combinations of the aforementioned voltage clamp circuits, the resistor can be also replaced by an inductor, or the aforementioned resistor and inductor can also be omitted. For example, in Fig. 18 and Fig. 19, the resistors in the voltage clamp circuits 1840 and 1940 can be replaced by inductors, or the resistors in the voltage clamp circuits 1840 and 1940 can be omitted. In other words, the voltage clamp circuits illustrated in Figs. 14A-14D and Figs. 15A-15D can be combined and configured similar to the embodiments illustrated in Fig. 18 and Fig. 19.

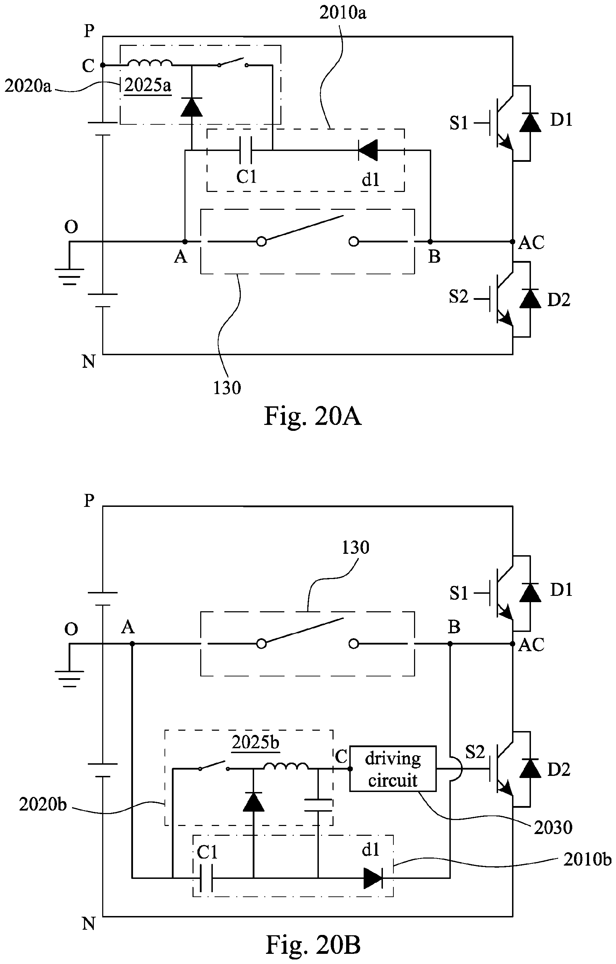

Fig. 20A is a schematic diagram of a converter according to a thirtieth embodiment of the present disclosure. As illustrated in Fig. 20A, the voltage clamp circuit includes a charging circuit 2010a and an active circuit 2020a electrically coupled to the charging circuit 2010a. The charging circuit 2010a and the switch circuit 130 are electrically coupled in parallel between the output terminal AC and the neutral point terminal O, and the charging circuit 2010a is configured to perform a charging operation according to the voltage across the switch circuit 130. The active circuit 2020a is configured to output an operation voltage to the positive input terminal P according to the operation of the charging circuit 2010a.

In the present embodiment, the charging circuit 2010a includes a capacitor C1 and a diode d1 which are electrically coupled in series between the output terminal AC and the neutral point terminal O. The active circuit 2020a includes a DC-to-DC (DC/DC) converter 2025a, e.g., buck converter, in which input terminals of the DC-to-DC converter 2025a are electrically coupled to two terminals of the capacitor C1, and an output terminal of the DC-to-DC converter 2025a is electrically coupled to the positive input terminal P.

In the voltage clamp operation, after the capacitor C1 stores the electrical energy corresponding to the voltage spikes, the electrical energy stored by the capacitor C1 is converted through the DC-to-DC converter 2025a and then outputted to the positive input terminal P.

In some embodiments, the output terminal of the active circuit 2020a (or the DC-to-DC converter 2025a) can be also electrically coupled to the negative input terminal N or the output terminal AC, such that the electrical energy stored by the capacitor C1 is converted through the DC-to-DC converter 2025a and then outputted to the negative input terminal N or the output terminal AC.

Fig. 20B is a schematic diagram of a converter according to a thirty-first embodiment of the present disclosure. As illustrated in Fig. 20B, the voltage clamp circuit includes a charging circuit 2010b and an active circuit 2020b, in which the active circuit 2020b is electrically coupled to the charging circuit 2010b. The charging circuit 2010b and the switch circuit 130 are electrically coupled in parallel between the output terminal AC and the neutral point terminal O, and the charging circuit 2010b is configured to perform a charging operation according to the voltage across the switch circuit 130. The active circuit 2020b is configured to output an operation voltage to a driving circuit 2030 according to the operation of the charging circuit 2010b, and the driving circuit 2030 is configured to drive the switch element S2.

In the present embodiment, the charging circuit 2010b includes a capacitor C1 and a diode d1 which are electrically coupled in series between the output terminal AC and the neutral point terminal O. The active circuit 2020b includes a DC-to-DC (DC/DC) converter 2025b, e.g., buck converter, in which input terminals of the DC-to-DC converter 2025b are electrically coupled to two terminals of the capacitor C1, and an output terminal of the DC-to-DC converter 2025b is electrically coupled to the driving circuit 2030.

In the voltage clamp operation, after the capacitor C1 stores the electrical energy corresponding to the voltage spikes, the electrical energy stored by the capacitor C1 is converted through the DC-to-DC converter 2025b and then fed back to supply power for the driving circuit 2030.

In some embodiments, the active circuit 2020b can also output the operation voltage to the driving circuit for driving the switch element S1 or the switch circuit 130, and thus the aforementioned embodiments are not limiting of the present disclosure.

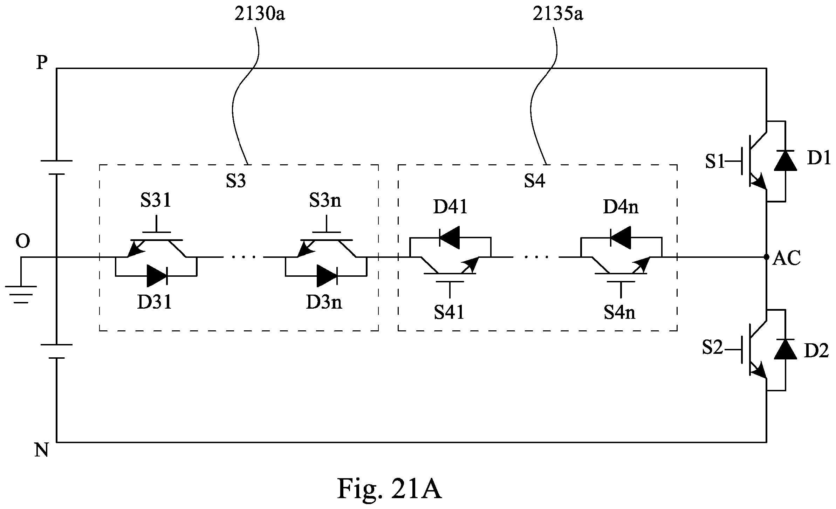

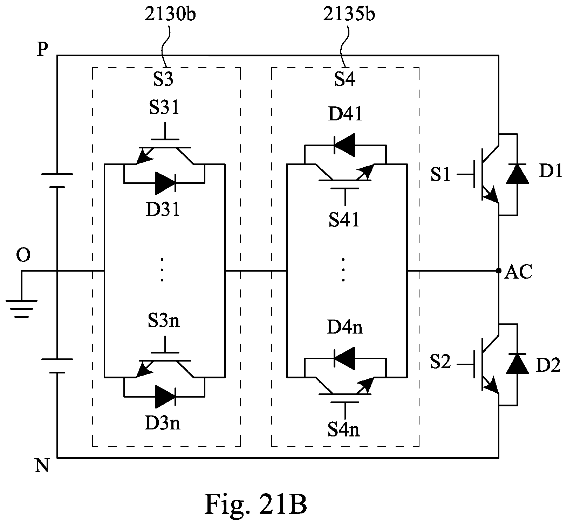

On the other hand, the anti-serially coupled switch units in the aforementioned switch circuits can separately include multiple switch elements, and the switch elements are electrically coupled in series or in parallel. For illustration, Fig. 21A is a schematic diagram of a basic topology of a converter according to some embodiments of the present disclosure. As illustrated in Fig. 21A, the switch units 2130a and 2135a in the switch circuit are anti-serially coupled with each other, in which the switch unit 2130a includes switch elements S31, S32, ..., S3n which are electrically coupled in series, and the switch unit 2135a includes switch elements S41, S42, ..., S4n which are electrically coupled in series. In addition, Fig. 21B is a schematic diagram of a basic topology of a converter according to some other embodiments of the present disclosure. As illustrated in Fig. 21B, the switch units 2130b and 2135b in the switch circuit are anti-serially coupled with each other, in which the switch unit 2130b includes switch elements S31, S32, ..., S3n which are electrically coupled in parallel, and the switch unit 2135b includes switch elements S41, S42, ..., S4n which are electrically coupled in parallel.

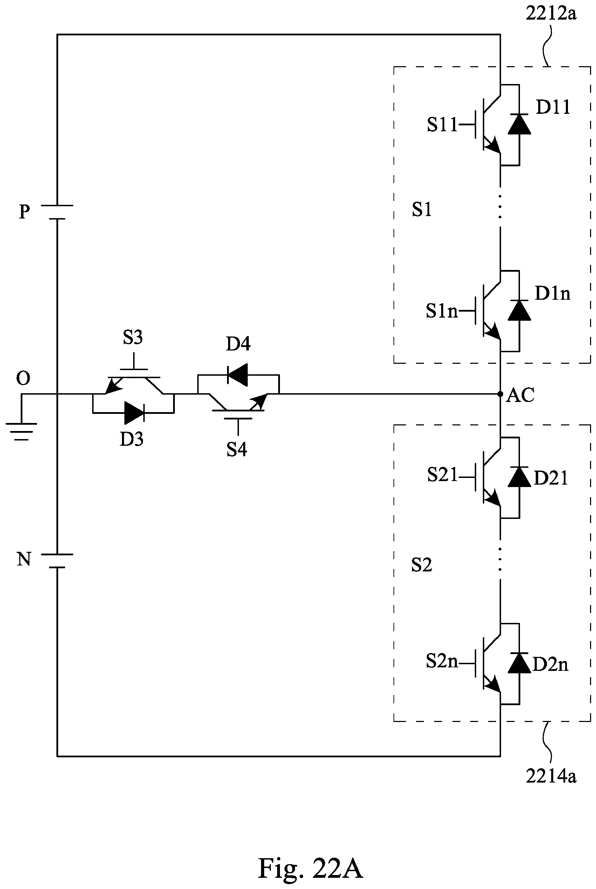

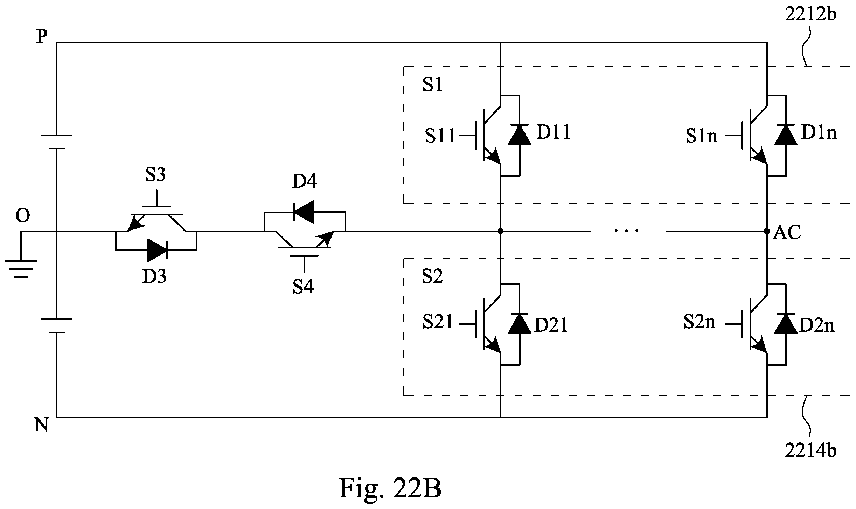

Moreover, the switch units 112 and 114 illustrated in Fig. 1A and Dig. B can also separately include multiple switch elements, and the switch elements are electrically coupled in series or in parallel. For illustration, Fig. 22A is a schematic diagram of a basic topology of a converter according to another embodiment of the present disclosure. As illustrated in Fig. 22A, the switch unit 2212a in the switch circuit includes switch elements S11, S12, ..., S1n which are electrically coupled in series, and the switch unit 2214a includes switch elements S21, S22, ..., S2n which are electrically coupled in series. In addition, Fig. 22B is a schematic diagram of a basic topology of a converter according to still another embodiment of the present disclosure. As illustrated in Fig. 22B, the switch unit 2212b includes switch elements S11, S12, ..., S1n which are electrically coupled in parallel, and the switch unit 2214b includes switch elements S21, S22, ..., S2n which are electrically coupled in parallel.

Based on the topologies of the converters illustrated in Fig. 21A, Fig. 21B, Fig. 22A, and Fig. 22B, one of ordinary skill in the art can apply the voltage clamp circuits in the aforementioned various embodiments to the converters illustrated in Fig. 21A, Fig. 21B, Fig. 22A, and Fig. 22B, in order to meet practical needs.

In practice, each of the diodes illustrated in the aforementioned embodiments can be implemented by a switch, e.g., metal-oxide semiconductor field effect transistor (MOSFET), bipolar junction transistor (BJT), or other type of transistor. Moreover, the aforementioned embodiments illustrate examples applied in the configuration with single-phase output, but they are only given for illustrative purposes and not limiting of the present disclosure; in other words, one of ordinary skill in the art can apply similar circuit configurations in converters with multiple phase (three-phase) output.

Based on the aforementioned embodiments, the voltage spikes can be suppressed effectively through the voltage clamp circuits by applying the aforementioned embodiments, and various types of the switch circuit structures which are affected by the voltage spikes can be protected through the voltage clamp circuits, such that the voltage clamp circuits can be flexibly applied in various switch circuit structures, further increasing circuit reliability.

## Claims

1. A converter (100a) comprising:
a first bridge arm (110) comprising a first switch unit (D1) and a second switch unit (D2) electrically coupled in series at an output terminal (AC);
a second bridge arm (120) comprising a first voltage source (122) and a second voltage source (124) electrically coupled in series at a neutral point terminal (O);
**characterised in that**
the converter further comprises:
a switch circuit (130) directly and electrically coupled to the neutral point terminal (O) and the output terminal (AC); and
a voltage clamp circuit (140a, 104b) electrically coupled to the output terminal (AC), the neutral point terminal (O), and one of a positive input terminal (P) and a negative input terminal (N), the voltage clamp circuit (140a, 104b) configured to clamp a voltage across the switch circuit (130).

2. The converter as claimed in claim 1, wherein the voltage clamp circuit comprises:
a charging circuit (C1, d1) electrically coupled in parallel with the switch circuit (130) between the output terminal (AC) and the neutral point terminal (O); and
a discharging circuit (r1) electrically coupled to the charging circuit (C1, d1) and one of the positive input terminal (P) and the negative input terminal (N).

3. The converter as claimed in claim 1, wherein the voltage clamp circuit comprises:
a capacitor (C1), a resistor (r1), a first diode (d1) and a second diode (d2);
wherein the capacitor (C1) and the first diode (d1) are electrically coupled in series at a node (NA) and electrically coupled to the output terminal (AC) and the neutral point terminal (O), the resistor (r1) is electrically coupled to the node (NA) and the positive input terminal (P) or electrically coupled to the node (NA) and the negative input terminal (N), and the second diode (d2) electrically coupled to the node (NA) and the positive input terminal (P) or electrically coupled to the node (NA) and the negative input terminal (N).

4. The converter as claimed in claim 1, wherein the voltage clamp circuit comprises:
a first diode (d1), a second diode (d2), a capacitor (C1) and a resistor (r1);
wherein the first diode (d1) and the capacitor (C1) are electrically coupled in series at a node (NA) and electrically coupled to the output terminal (AC) and the neutral point terminal (O), and the second diode (d2) and the resistor (r1) are electrically coupled in series between the node (NA) and the positive input terminal (P) or between the node (NA) and the negative input terminal (N).

5. The converter as claimed in claim 1, wherein the voltage clamp circuit comprises:
a capacitor (C1), an inductor (L1) and a diode (d1);
wherein the capacitor (C1) and the diode (d1) are electrically coupled in series at a node (NA) and electrically coupled to the output terminal (AC) and the neutral point terminal (O), and the inductor (L1) is electrically coupled to the node (NA) and the positive input terminal (P) or between the node (NA) and the negative input terminal (N).

6. The converter as claimed in claim 1, wherein the voltage clamp circuit comprises:
a first diode (d1), a second diode (d2), a capacitor (C1) and an inductor (L1);
wherein the first diode (d1) and the capacitor (C1) are electrically coupled in series at a node (NA) and electrically coupled to the output terminal (AC) and the neutral point terminal (O), and the second diode (d2) and the inductor (L1) are electrically coupled in series between the node (NA) and the positive input terminal (P) or between the node (NA) and the negative input terminal (N).

7. The converter as claimed in claim 1, wherein the voltage clamp circuit comprises:
a capacitor (C1) and a diode (d1);
wherein the capacitor (C1) and the diode (d1) are electrically coupled in series at the positive (P) or negative input terminal (N), and the capacitor (C1) and the diode (d1) are electrically coupled to the output terminal (AC) and the neutral point terminal (O).

8. The converter as claimed in claim 1, wherein the voltage clamp circuit comprises:
a first diode (d1), a second diode (d2), and a capacitor (C1);
wherein the first diode (d1) and the capacitor (C1) are electrically coupled in series at a node (NA), and the second diode (d2) is electrically coupled to the node (NA) and the positive input terminal (P) or between the node (NA) and the negative input terminal (N).

9. The converter as claimed in claim 1, wherein the voltage clamp circuit comprises:
a first capacitor (C11) and a second capacitor (C21), a first resistor (r11) and a second resistor (r21) and a first diode (d11), a second diode (d21), a third diode (d3) and a fourth diode (d4);
wherein the first capacitor (C11) and the first diode (d11) are electrically coupled in series at a first node and electrically coupled to the output terminal (AC) and the neutral point terminal (O), and the first resistor (r11) is electrically coupled to the first node and the positive input terminal (P);
wherein the second capacitor (C21) and the second diode (d21) are electrically coupled in series at a second node and electrically coupled to the output terminal (AC) and the neutral point terminal (O), and the second resistor (r21) is electrically coupled to the second node and the negative input terminal (N);
wherein the third diode (d3) is electrically coupled to the first node and the positive input terminal (P), and the fourth diode (d4) is electrically coupled to the second node and the negative input terminal (N).

10. The converter as claimed in claim 1, wherein the voltage clamp circuit comprises:
a first capacitor (C1) and a second capacitor, a first inductor (L1) and a second inductor, and a first diode (d1) and a second diode;
wherein the first capacitor (C1) and the first diode (d1) are electrically coupled in series at a first node (NA) and electrically coupled to the output terminal (AC) and the neutral point terminal (O), and the first inductor (L1) is electrically coupled to the first node (NA) and the positive input terminal (P);
wherein the second capacitor and the second diode are electrically coupled in series at a second node and electrically coupled to the output terminal and the neutral point terminal, and the second inductor is electrically coupled to the second node and the negative input terminal.

11. The converter as claimed in claim 1, wherein the voltage clamp circuit comprises:
a first capacitor (C1), a second capacitor, a first diode (d1) and a second diode;
wherein the first capacitor (C1) and the first diode (d1) are electrically coupled in series at the positive input terminal (P) and electrically coupled to the output terminal (AC) and the neutral point terminal (O);
wherein the second capacitor and the second diode are electrically coupled in series at the negative input terminal and electrically coupled to the output terminal and the neutral point terminal.

12. The converter as claimed in claim 1, wherein the switch circuit comprises:
two switch units (232, 234) which are in anti-serial or anti-parallel connection with each other between the output terminal (AC) and the neutral point terminal (O).

13. The converter as claimed in claim 1,
wherein the voltage clamp circuit comprises:
a charging circuit (2010b) electrically coupled in parallel with the switch circuit between the output terminal (AC) and the neutral point terminal (O), the charging circuit configured to perform a charging operation according to the voltages across the switch circuit; and
an active circuit (2025b) electrically coupled to the charging circuit and configured to output an operation voltage to one of the positive input terminal (P), the negative input terminal (N), the output terminal (AC), and a driving circuit (2030) according to the operation of the charging circuit, wherein the driving circuit is configured to drive the first switch unit, the second switch unit or the switch circuit.

14. The converter as claimed in claim 13, wherein the charging circuit (2010a) comprises a diode (d1) and a capacitor (C1) electrically coupled in series between the neutral point terminal (O) and the output terminal (AC), and the active circuit (2025a) comprises a DC-to-DC converter having input terminals electrically coupled to two terminals of the capacitor (C1) and an output terminal electrically coupled to the positive (P) or negative input terminal (N).

15. The converter as claimed in claim 13, wherein the charging circuit (2010b) comprises a diode (d1) and a capacitor (C1) electrically coupled in series between the neutral point terminal (O) and the output terminal (AC), and the active circuit (2025b) comprises a DC-to-DC converter having input terminals electrically coupled to two terminals of the capacitor (C1) and an output terminal electrically coupled to the driving circuit (2030).

## Patentansprüche

1. Wandler (100a), umfassend:
einen ersten Brückenzweig (110), der eine erste Schalteinheit (D1) und eine zweite Schalteinheit (D2) umfasst, die an einem Ausgangsanschluss (AC) elektrisch in Reihe verbunden sind;
einen zweiten Brückenzweig (120), der eine erste Spannungsquelle (122) und eine zweite Spannungsquelle (124) umfasst, die an einem Neutralpunktanschluss (O) elektrisch in Reihe verbunden sind;
**dadurch gekennzeichnet, dass** der Wandler ferner umfasst:
eine Schalterschaltung (130), die mit dem Neutralpunktanschluss (O) und dem Ausgangsanschluss (AC) direkt und elektrisch verbunden ist; und
eine Spannungsklemmschaltung (140a, 104b), die mit dem Ausgangsanschluss (AC), dem Neutralpunktanschluss (O) und einem von einem positiven Eingangsanschluss (P) und einem negativen Eingangsanschluss (N) elektrisch verbunden ist, wobei die Spannungsklemmschaltung (140a, 104b) konfiguriert ist, um eine Spannung über der Schalterschaltung (130) zu klemmen.

2. Wandler nach Anspruch 1, bei dem die
Spannungsklemmschaltung umfasst:
eine Ladeschaltung (C1, d1), die elektrisch parallel zu der Schalterschaltung (130) zwischen dem Ausgangsanschluss (AC) und dem Neutralpunktanschluss (O) verbunden ist; und
eine Entladeschaltung (r1), die elektrisch mit der Ladeschaltung (C1, d1) und einem von dem positiven Eingangsanschluss (P) und dem negativen Eingangsanschluss (N) verbunden ist.

3. Wandler nach Anspruch 1, bei dem die
Spannungsklemmschaltung umfasst:
einen Kondensator (C1), einen Widerstand (r1), eine erste Diode (d1) und eine zweite Diode (d2);
wobei der Kondensator (C1) und die erste Diode (d1) an einem Knotenpunkt (NA) elektrisch in Reihe verbunden und mit dem Ausgangsanschluss (AC) und dem Neutralpunktanschluss (O) elektrisch verbunden sind, der Widerstand (r1) mit dem Knotenpunkt (NA) und dem positiven Eingangsanschluss (P) oder mit dem Knotenpunkt (NA) und dem negativen Eingangsanschluss (N) elektrisch verbunden ist, und die zweite Diode (d2) mit dem Knotenpunkt (NA) und dem positiven Eingangsanschluss (P) oder mit dem Knotenpunkt (NA) und dem negativen Eingangsanschluss (N) elektrisch verbunden ist.

4. Wandler nach Anspruch 1, bei dem die
Spannungsklemmschaltung umfasst:
eine erste Diode (d1), eine zweite Diode (d2), einen Kondensator (C1) und einen Widerstand (r1);
wobei die erste Diode (d1) und der Kondensator (C1) an einem Knotenpunkt (NA) elektrisch in Reihe verbunden und mit dem Ausgangsanschluss (AC) und dem Neutralpunktanschluss (O) elektrisch verbunden sind, und die zweite Diode (d2) und der Widerstand (r1) zwischen dem Knotenpunkt (NA) und dem positiven Eingangsanschluss (P) oder zwischen dem Knotenpunkt (NA) und dem negativen Eingangsanschluss (N) elektrisch in Reihe verbunden sind.

5. Wandler nach Anspruch 1, bei dem die
Spannungsklemmschaltung umfasst:
einen Kondensator (C1), einen Induktor (L1) und eine Diode (d1);
wobei der Kondensator (C1) und die Diode (d1) an einem Knotenpunkt (NA) elektrisch in Reihe verbunden und mit dem Ausgangsanschluss (AC) und dem Neutralpunktanschluss (O) elektrisch verbunden sind, und der Induktor (L1) mit dem Knotenpunkt (NA) und dem positiven Eingangsanschluss (P) oder zwischen dem Knotenpunkt (NA) und dem negativen Eingangsanschluss (N) elektrisch verbunden ist.

6. Wandler nach Anspruch 1, bei dem die
Spannungsklemmschaltung umfasst:
eine erste Diode (d1), eine zweite Diode (d2), einen Kondensator (C1) und einen Induktor (L1);
wobei die erste Diode (d1) und der Kondensator (C1) an einem Knotenpunkt (NA) elektrisch in Reihe verbunden und mit dem Ausgangsanschluss (AC) und dem Neutralpunktanschluss (O) elektrisch verbunden sind, und die zweite Diode (d2) und der Induktor (L1) zwischen dem Knotenpunkt (NA) und dem positiven Eingangsanschluss (P) oder zwischen dem Knotenpunkt (NA) und dem negativen Eingangsanschluss (N) elektrisch in Reihe verbunden sind.

7. Wandler nach Anspruch 1, bei dem die
Spannungsklemmschaltung umfasst:
einen Kondensator (C1) und eine Diode (d1);
wobei der Kondensator (C1) und die Diode (d1) an dem positiven (P) oder negativen Eingangsanschluss (N) elektrisch in Reihe verbunden sind, und der Kondensator (C1) und die Diode (d1) mit dem Ausgangsanschluss (AC) und dem Neutralpunktanschluss (O) elektrisch verbunden sind.

8. Wandler nach Anspruch 1, bei dem die
Spannungsklemmschaltung umfasst:
eine erste Diode (d1), eine zweite Diode (d2) und einen Kondensator (C1);
wobei die erste Diode (d1) und der Kondensator (C1) an einem Knotenpunkt (NA) elektrisch in Reihe verbunden sind, und die zweite Diode (d2) mit dem Knotenpunkt (NA) und dem positiven Eingangsanschluss (P) oder zwischen dem Knotenpunkt (NA) und dem negativen Eingangsanschluss (N) elektrisch verbunden ist.

9. Wandler nach Anspruch 1, bei dem die
Spannungsklemmschaltung umfasst:
einen ersten Kondensator (C11) und einen zweiten Kondensator (C21), einen ersten Widerstand (r11) und einen zweiten Widerstand (r21) und eine erste Diode (d11), eine zweite Diode (d21), eine dritte Diode (d3) und eine vierte Diode (d4);
wobei der erste Kondensator (C11) und die erste Diode (d11) an einem ersten Knotenpunkt elektrisch in Reihe verbunden und mit dem Ausgangsanschluss (AC) und dem Neutralpunktanschluss (O) elektrisch verbunden sind, und der erste Widerstand (r11) mit dem ersten Knotenpunkt und dem positiven Eingangsanschluss (P) elektrisch verbunden ist;
wobei der zweite Kondensator (C21) und die zweite Diode (d21) an einem zweiten Knotenpunkt elektrisch in Reihe verbunden und mit dem Ausgangsanschluss (AC) und dem Neutralpunktanschluss (O) elektrisch verbunden sind, und der zweite Widerstand (r21) mit dem zweiten Knotenpunkt und dem negativen Eingangsanschluss (N) elektrisch verbunden ist;
wobei die dritte Diode (d3) elektrisch mit dem ersten Knotenpunkt und dem positiven Eingangsanschluss (P) verbunden ist, und die vierte Diode (d4) elektrisch mit dem zweiten Knotenpunkt und dem negativen Eingangsanschluss (N) verbunden ist.

10. Wandler nach Anspruch 1, bei dem die
Spannungsklemmschaltung umfasst:
einen ersten Kondensator (C1) und einen zweiten Kondensator, einen ersten Induktor (L1) und einen zweiten Induktor, und eine erste Diode (d1) und eine zweite Diode;
wobei der erste Kondensator (C1) und die erste Diode (d1) an einem ersten Knotenpunkt (NA) elektrisch in Reihe verbunden und mit dem Ausgangsanschluss (AC) und dem Neutralpunktanschluss (O) elektrisch verbunden sind, und der erste Induktor (L1) mit dem ersten Knotenpunkt (NA) und dem positiven Eingangsanschluss (P) elektrisch verbunden ist;
wobei der zweite Kondensator und die zweite Diode an einem zweiten Knotenpunkt elektrisch in Reihe verbunden und mit dem Ausgangsanschluss und dem Neutralpunktanschluss elektrisch verbunden sind, und der zweite Induktor mit dem zweiten Knotenpunkt und dem negativen Eingangsanschluss elektrisch verbunden ist.

11. Wandler nach Anspruch 1, bei dem die
Spannungsklemmschaltung umfasst:
einen ersten Kondensator (C1), einen zweiten Kondensator, eine erste Diode (d1) und eine zweite Diode;
wobei der erste Kondensator (C1) und die erste Diode (d1) an dem positiven Eingangsanschluss (P) elektrisch in Reihe verbunden sind und mit dem Ausgangsanschluss (AC) und dem Neutralpunktanschluss (O) elektrisch verbunden sind;
wobei der zweite Kondensator und die zweite Diode an dem negativen Eingangsanschluss elektrisch in Reihe verbunden und mit dem Ausgangsanschluss und dem Neutralpunktanschluss elektrisch verbunden sind.

12. Wandler nach Anspruch 1, bei dem die Schalterschaltung umfasst:
zwei Schalteinheiten (232, 234), die zwischen dem Ausgangsanschluss (AC) und dem Neutralpunktanschluss (O) in antiserieller oder antiparalleler Verbindung miteinander stehen.

13. Wandler nach Anspruch 1, bei dem die
Spannungsklemmschaltung umfasst:
eine Ladeschaltung (2010b), die elektrisch parallel zu der Schalterschaltung zwischen dem Ausgangsanschluss (AC) und dem Neutralpunktanschluss (O) verbunden ist, wobei die Ladeschaltung konfiguriert ist, um einen Ladevorgang in Abhängigkeit von den Spannungen an der Schalterschaltung durchzuführen; und
eine aktive Schaltung (2025b), die elektrisch mit der Ladeschaltung verbunden und konfiguriert ist, um eine Betriebsspannung gemäß dem Betrieb der Ladeschaltung an entweder den positiven Eingangsanschluss (P), den negativen Eingangsanschluss (N), den Ausgangsanschluss (AC) oder eine Treiberschaltung (2030) auszugeben, wobei die Treiberschaltung konfiguriert ist, um die erste Schaltereinheit, die zweite Schaltereinheit oder die Schalterschaltung zu treiben.

14. Wandler nach Anspruch 13, bei dem die Ladeschaltung (2010a) eine Diode (d1) und einen Kondensator (C1) umfasst, die zwischen dem Neutralpunktanschluss (O) und dem Ausgangsanschluss (AC) elektrisch in Reihe verbunden sind, und die aktive Schaltung (2025a) einen Gleichspannungswandler umfasst, der Eingangsanschlüsse, die mit zwei Anschlüssen des Kondensators (C1) elektrisch verbunden sind, und einen Ausgangsanschluss aufweist, der elektrisch mit dem positiven (P) oder negativen Eingangsanschluss (N) elektrisch verbunden ist.

15. Wandler nach Anspruch 13, bei dem die Ladeschaltung (2010b) eine Diode (d1) und einen Kondensator (C1) umfasst, die zwischen dem Neutralpunktanschluss (O) und dem Ausgangsanschluss (AC) elektrisch in Reihe verbunden sind, und die aktive Schaltung (2025b) einen Gleichspannungswandler umfasst, dessen Eingangsanschlüsse mit zwei Anschlüssen des Kondensators (C1) elektrisch verbunden sind und dessen Ausgangsanschluss elektrisch mit der Treiberschaltung (2030) elektrisch verbunden ist.

## Revendications

1. Convertisseur (100a) comprenant :
une première branche de pont (110) comprenant une première unité de commutation (D1) et une seconde unité de commutation (D2) couplées électriquement en série au niveau d'une borne de sortie (AC) ;
une seconde branche de pont (120) comprenant une première source de tension (122) et une seconde source de tension (124) couplées électriquement en série au niveau d'une borne de point neutre (O) ;
**caractérisé en ce que** le convertisseur comprend en outre :
un circuit de commutation (130) directement et électriquement couplé à la borne de point neutre (O) et à la borne de sortie (AC) ; et
un circuit de fixation de niveau de tension (140a, 104b) couplé électriquement à la borne de sortie (AC), à la borne de point neutre (O), et à l'une parmi une borne d'entrée positive (P) et une borne d'entrée négative (N), le circuit de fixation de niveau de tension (140a, 104b) étant configuré de manière à fixer le niveau d'une tension à travers le circuit de commutation (130).

2. Convertisseur selon la revendication 1, dans lequel le circuit de fixation de niveau de tension comprend :
un circuit de charge (C1, d1) couplé électriquement en parallèle au circuit de commutation (130) entre la borne de sortie (AC) et la borne de point neutre (O) ; et
un circuit de décharge (r1) couplé électriquement au circuit de charge (C1, d1) et à l'une parmi la borne d'entrée positive (P) et la borne d'entrée négative (N).

3. Convertisseur selon la revendication 1, dans lequel le circuit de fixation de niveau de tension comprend :
un condensateur (C1), une résistance (r1), une première diode (d1) et une deuxième diode (d2) ;
dans lequel le condensateur (C1) et la première diode (d1) sont couplés électriquement en série au niveau d'un nœud (NA), et sont couplés électriquement à la borne de sortie (AC) et à la borne de point neutre (O), la résistance (r1) est couplée électriquement au nœud (NA) et à la borne d'entrée positive (P), ou est couplée électriquement au nœud (NA) et à la borne d'entrée négative (N), et la deuxième diode (d2) est couplée électriquement au nœud (NA) et à la borne d'entrée positive (P) ou est couplée électriquement au nœud (NA) et à la borne d'entrée négative (N).

4. Convertisseur selon la revendication 1, dans lequel le circuit de fixation de niveau de tension comprend :
une première diode (d1), une deuxième diode (d2), un condensateur (C1) et une résistance (r1) ;
dans lequel la première diode (d1) et le condensateur (C1) sont couplés électriquement en série au niveau d'un nœud (NA) et sont couplés électriquement à la borne de sortie (AC) et à la borne de point neutre (O), et la deuxième diode (d2) et la résistance (r1) sont couplées électriquement en série entre le nœud (NA) et la borne d'entrée positive (P) ou entre le nœud (NA) et la borne d'entrée négative (N).

5. Convertisseur selon la revendication 1, dans lequel le circuit de fixation de niveau de tension comprend :
un condensateur (C1), une bobine d'induction (L1) et une diode (d1) ;
dans lequel le condensateur (C1) et la diode (d1) sont couplés électriquement en série au niveau d'un nœud (NA), et sont couplés électriquement à la borne de sortie (AC) et à la borne de point neutre (O), et la bobine d'induction (L1) est couplée électriquement au nœud (NA) et à la borne d'entrée positive (P), ou entre le nœud (NA) et la borne d'entrée négative (N).

6. Convertisseur selon la revendication 1, dans lequel le circuit de fixation de niveau de tension comprend :
une première diode (d1), une deuxième diode (d2), un condensateur (C1) et une bobine d'induction (L1) ;
dans lequel la première diode (d1) et le condensateur (C1) sont couplés électriquement en série au niveau d'un nœud (NA) et sont couplés électriquement à la borne de sortie (AC) et à la borne de point neutre (O), et la deuxième diode (d2) et la bobine d'induction (L1) sont couplées électriquement en série entre le nœud (NA) et la borne d'entrée positive (P), ou entre le nœud (NA) et la borne d'entrée négative (N).

7. Convertisseur selon la revendication 1, dans lequel le circuit de fixation de niveau de tension comprend :
un condensateur (C1) et une diode (d1) ;
dans lequel le condensateur (C1) et la diode (d1) sont couplés électriquement en série au niveau de la borne d'entrée positive (P) ou de la borne d'entrée négative (N), et le condensateur (C1) et la diode (d1) sont couplés électriquement à la borne de sortie (AC) et à la borne de point neutre (O).

8. Convertisseur selon la revendication 1, dans lequel le circuit de fixation de niveau de tension comprend :
une première diode (d1), une deuxième diode (d2), et un condensateur (C1) ;
dans lequel la première diode (d1) et le condensateur (C1) sont couplés électriquement en série au niveau d'un nœud (NA), et la deuxième diode (d2) est couplée électriquement au nœud (NA) et à la borne d'entrée positive (P), ou entre le nœud (NA) et la borne d'entrée négative (N).

9. Convertisseur selon la revendication 1, dans lequel le circuit de fixation de niveau de tension comprend :
un premier condensateur (C11) et un second condensateur (C21), une première résistance (r11) et une seconde résistance (r21), et une première diode (d11), une deuxième diode (d21), une troisième diode (d3) et une quatrième diode (d4) ;
dans lequel le premier condensateur (C11) et la première diode (d11) sont couplés électriquement en série au niveau d'un premier nœud, et sont couplés électriquement à la borne de sortie (AC) et à la borne de point neutre (O), et la première résistance (r11) est couplée électriquement au premier nœud et à la borne d'entrée positive (P) ;
dans lequel le second condensateur (C21) et la deuxième diode (d21) sont couplés électriquement en série au niveau d'un second nœud, et sont couplés électriquement à la borne de sortie (AC) et à la borne de point neutre (O), et la seconde résistance (r21) est couplée électriquement au second nœud et à la borne d'entrée négative (N) ;
dans lequel la troisième diode (d3) est couplée électriquement au premier nœud et à la borne d'entrée positive (P), et la quatrième diode (d4) est couplée électriquement au second nœud et à la borne d'entrée négative (N).

10. Convertisseur selon la revendication 1, dans lequel le circuit de fixation de niveau de tension comprend :
un premier condensateur (C1) et un second condensateur, une première bobine d'induction (L1) et une seconde bobine d'induction, et une première diode (d1) et une deuxième diode ;
dans lequel le premier condensateur (C1) et la première diode (d1) sont couplés électriquement en série au niveau d'un premier nœud (NA) et sont couplés électriquement à la borne de sortie (AC) et à la borne de point neutre (O), et la première bobine d'induction (L1) est couplée électriquement au premier nœud (NA) et à la borne d'entrée positive (P) ;
dans lequel le second condensateur et la deuxième diode sont couplés électriquement en série au niveau d'un second nœud, et sont couplés électriquement à la borne de sortie et à la borne de point neutre, et la seconde bobine d'induction est couplée électriquement au second nœud et à la borne d'entrée négative.

11. Convertisseur selon la revendication 1, dans lequel le circuit de fixation de niveau de tension comprend :
un premier condensateur (C1), un second condensateur, une première diode (d1) et une deuxième diode ;
dans lequel le premier condensateur (C1) et la première diode (d1) sont couplés électriquement en série au niveau de la borne d'entrée positive (P), et sont couplés électriquement à la borne de sortie (AC) et à la borne de point neutre (O) ;
dans lequel le second condensateur et la deuxième diode sont couplés électriquement en série au niveau de la borne d'entrée négative, et sont couplés électriquement à la borne de sortie et à la borne de point neutre.

12. Convertisseur selon la revendication 1, dans lequel le circuit de commutation comprend :
deux unités de commutation (232, 234) qui sont mutuellement en connexion anti-série ou antiparallèle entre la borne de sortie (AC) et la borne de point neutre (O).

13. Convertisseur selon la revendication 1, dans lequel le circuit de fixation de niveau de tension comprend :
un circuit de charge (2010b) couplé électriquement en parallèle au circuit de commutation entre la borne de sortie (AC) et la borne de point neutre (O), le circuit de charge étant configuré de manière à mettre en œuvre une opération de charge selon les tensions à travers le circuit de commutation ; et
un circuit actif (2025b) couplé électriquement au circuit de charge, et configuré de manière à fournir en sortie une tension de fonctionnement à l'une parmi la borne d'entrée positive (P), la borne d'entrée négative (N), la borne de sortie (AC), et à un circuit d'attaque (2030) selon l'opération du circuit de charge, dans lequel le circuit d'attaque est configuré de manière à exciter la première unité de commutation, la seconde unité de commutation ou le circuit de commutation.

14. Convertisseur selon la revendication 13, dans lequel le circuit de charge (2010a) comprend une diode (d1) et un condensateur (C1) couplés électriquement en série entre la borne de point neutre (O) et la borne de sortie (AC), et le circuit actif (2025a) comprend un convertisseur continu-continu présentant des bornes d'entrée couplées électriquement à deux bornes du condensateur (C1), et une borne de sortie couplée électriquement à la borne d'entrée positive (P) ou à la borne d'entrée négative (N).

15. Convertisseur selon la revendication 13, dans lequel le circuit de charge (2010b) comprend une diode (d1) et un condensateur (C1) couplés électriquement en série entre la borne de point neutre (O) et la borne de sortie (AC), et le circuit actif (2025b) comprend un convertisseur continu-continu présentant des bornes d'entrée couplées électriquement à deux bornes du condensateur (C1), et une borne de sortie couplée électriquement au circuit d'attaque (2030).
